# EUROPEAN PATENT APPLICATION

(11) **EP 4 852 596 A1**
(43) Date of publication of application: **09.12.2026**
(21) Application number: 24920978.4
(22) Date of filing: 01.02.2024
(51) Int. Cl.: H04W 74/0833

(54) **COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: Taor, Simon Edward William
(86) International application number: PCT/CN2024/075351
(87) International publication number: WO 2025/160915

(57) **Abstract**

The present application relates to a communication method and a communication device. The method comprises: a first communication device uses an access mode to send access information and a reference signal related to the access information. According to embodiments of the present application, access information and a reference signal related to the access information are sent by using an access mode, so that the occupation of communication resources can be reduced.

## Description

### TECHNICAL FIELD

The present disclosure relates to the field of communication, and more specifically, to a communication method and a communication device.

### BACKGROUND

The random access may include four-step random access, two-step random access, and the like. Due to the complexity and time-varying nature of wireless channel environment, in the process of random access, the transmitter usually needs to allocate different transmission resources for information and transmission resources for reference signals at different resource locations, and the utilization rate of transmission resources is relatively low.

### SUMMARY

The embodiments of the present disclosure provide a communication method and a communication device, which can reduce the occupation of communication resources.

The embodiments of the present disclosure provide a communication method. The method includes the following operation. The first communication device sends access information and reference signal(s) associated with the access information by using an access mode.

The embodiments of the present disclosure provide a communication method. The method includes the following operation. The second communication device receives access information and reference signal(s) associated with the access information by using an access mode.

The embodiments of the present disclosure provide the first communication device. The first communication device includes the first sending unit. The first sending unit is configured to send access information and reference signal(s) associated with the access information by using an access mode.

The embodiments of the present disclosure provide the second communication device. The second communication device includes the second receiving unit. The second receiving unit is configured to receive access information and reference signal(s) associated with the access information by using an access mode.

The embodiments of the present disclosure provide a communication device. The communication device includes a transceiver, a processor, and a memory. The memory is configured to store a computer program, the transceiver is configured to communicate with other devices, and the processor is configured to invoke and execute the computer program stored in the memory to cause the communication device to perform the communication method described above.

The embodiments of the present disclosure provide a chip for implementing the communication method.

Specifically, the chip includes a processor for invoking and executing a computer program from a memory to cause a device on which the chip is mounted to perform the communication method described above.

The embodiments of the present disclosure provide a computer-readable storage medium for storing a computer program, and when the computer program is run by a device, the device performs the communication method described above.

The embodiments of the present disclosure provide a computer program product. The computer program product includes computer program instructions that cause a computer to execute the communication method described above.

The embodiments of the present disclosure provide a computer program that, when executed on a computer, causes the computer to execute the communication method described above.

In the embodiments of the present disclosure, the access information and the reference signal(s) associated with the access information are sent by using an access mode, so that the occupation of communication resources can be reduced.

### BRIEF DESCRIPTION OF THE DRAWINGS

FIG. 1 is a schematic diagram of an application scenario according to an embodiment of the present disclosure.
FIG. 2 is a schematic diagram of a four-step RACH process.
FIG. 3 is a schematic flowchart of a communication method according to an embodiment of the present disclosure.
FIG. 4 is a schematic flowchart of a communication method according to another embodiment of the present disclosure.
FIG. 5 is a schematic flowchart of a communication method according to another embodiment of the present disclosure.
FIG. 6 is a schematic flowchart of a communication method according to an embodiment of the present disclosure.
FIG. 7 is a schematic flowchart of a communication method according to another embodiment of the present disclosure.
FIG. 8 is a schematic flowchart of a communication method according to another embodiment of the present disclosure.
FIG. 9 is a schematic diagram of a base station configuring the first access mode to UE.
FIG. 10 is a schematic diagram of UE configuring the first access mode to a base station.
FIG. 11 is a schematic diagram of a base station configuring the second access mode to UE.
FIG. 12 is a schematic diagram of UE configuring the second access mode to a base station.
FIG. 13 is a schematic block diagram of the first communication device according to an embodiment of the present disclosure.
FIG. 14 is a schematic block diagram of the second communication device according to an embodiment of the present disclosure.
FIG. 15 is a schematic block diagram of a communication device according to an embodiment of the present disclosure.
FIG. 16 is a schematic block diagram of a chip according to an embodiment of the present disclosure.
FIG. 17 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure.

The technical solution of the embodiments of the present disclosure may be applied to various communication systems, such as a Long Term Evolution (LTE) system, an Advanced long term evolution (LTE-A) system, a New Radio (NR) system, an evolved system of an NR system, an LTE-based access to unlicensed spectrum (LTE-U) system, and an NR-based access to unlicensed spectrum (NR-U) system, Non-Terrestrial Networks (NTN) system, Universal Mobile Telecommunication System (UMTS), Wireless Local Area Networks (WLAN), Wireless Fidelity (WiFi), 5th-Generation (5G) systems or other communication systems, etc.

Generally speaking, the conventional Communication system supports a limited number of connections and is easy to implement. However, with the development of communication technology, the mobile communication system will not only support conventional Communication, but also support, for example, Device to Device (D2D) Communication, Machine to Machine (M2M) Communication, Machine Type Communication (MTC), Vehicle to Vehicle (V2V) Communication, or Vehicle to everything (V2X) Communication, and the like, and embodiments of the present disclosure can also be applied to these Communication systems.

In one embodiment, the communication system in the embodiments of the present disclosure may be applied to a Carrier Aggregation (CA) scenario, a Dual Connectivity (DC) scenario, and a Standalone (SA) network layout scenario.

In one embodiment, the communication system in the embodiments of the present disclosure may be applied to an unlicensed spectrum. The unlicensed spectrum may also be considered as a shared spectrum. Alternatively, the communication system in the embodiments of the present disclosure may also be applied to a licensed spectrum. The licensed spectrum may also be considered as a non-shared spectrum.

The embodiments of the present disclosure have described various embodiments in connection with the network device and the terminal device. The terminal device may also be referred to as a User Equipment (UE), an access terminal, a User unit, a User station, a mobile station, a mobile stage, a remote station, a remote terminal, a mobile device, a User terminal, a terminal, a wireless communication device, a User agent, a User device, or the like.

The terminal device may be a station (ST) in a WLAN, and may be a cellular telephone, a cordless telephone, a Session Initiation Protocol (SIP) telephone, a Wireless Local Loop (WLL) station, a Personal Digital Assistant (PDA) device, a handheld device with Wireless communication capabilities, a computing device or other processing device connected to a Wireless modem, an in-vehicle device, a wearable device, a terminal device in a next generation communication system such as an NR Network, or a terminal device in a future evolving Public Land Mobile Network (PLMN) Network, or the like.

In the embodiments of the present disclosure, the terminal device may be deployed on land, including indoor or outdoor, handheld, wearable, or vehicle-mounted. It may also be deployed on the water surface (e.g. ships, etc.). It may also be deployed in the air (e.g. on aircraft, balloons and satellites, etc.).

In the embodiments of the present disclosure, the terminal device may be a Mobile Phone, a tablet computer, a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, a wireless terminal device in a smart home, or the like.

By way of example and not limitation, in the embodiments of the present disclosure, the terminal device may also be a wearable device. The wearable device may also be called a wearable intelligent device, which is a general term for intelligently designing and developing wearable devices, such as glasses, gloves, watches, clothing and shoes, by applying wearable technology to daily wear. A wearable device is a portable device that is worn directly on the body or integrated into a user's clothing or accessories. Wearable devices are not only hardware devices, but also realize powerful functions through software support, data interaction and cloud interaction. Generalized wearable smart devices include full functions, large sizes, complete or partial functions without relying on smart phones, such as smart watches or smart glasses, and only focus on a certain type of application functions, which need to be used in conjunction with other devices such as smart phones, such as various smart bracelets and smart jewelry for physical sign monitoring.

In the embodiments of the present disclosure, the network device may be a device for communicating with a mobile device, and the network device may be an Access Point (AP) in a WLAN, an Evolutional Node B (eNB or eNodeB) in LTE, a relay station or an Access Point, a vehicle-mounted device, a wearable device, a network device (gNB) in an NR network, a network device in a future evolutionary PLMN network, a network device in an NTN network, or the like.

By way of example and not limitation, in the embodiments of the present disclosure, the network device may have mobile characteristics, and for example, the network device may be a mobile device. Alternatively, the network device may be a satellite or a balloon station. For example, the satellite may be a low earth Orbit (LEO) satellite, a medium earth Orbit (MEO) satellite, a geostationary earth Orbit (GEO) satellite, a High Elliptical Orbit (HEO) satellite, or the like. Alternatively, the network device may also be a base station provided at a location such as land or water.

In the embodiments of the present disclosure, the network device may provide services for the cell, and the terminal device communicates with the network device through transmission resources (e.g., frequency domain resources, or frequency spectrum resources) used by the cell. The cell may be a cell corresponding to the network device (e.g., a base station), and the cell may belong to a macro base station or a base station corresponding to a Small cell. The Small cells here may include: Metro cells, Micro cells, Pico cells, Femto cells, etc. These Small cells have the characteristics of Small coverage and low transmission power, and are suitable for providing high-speed data transmission services.

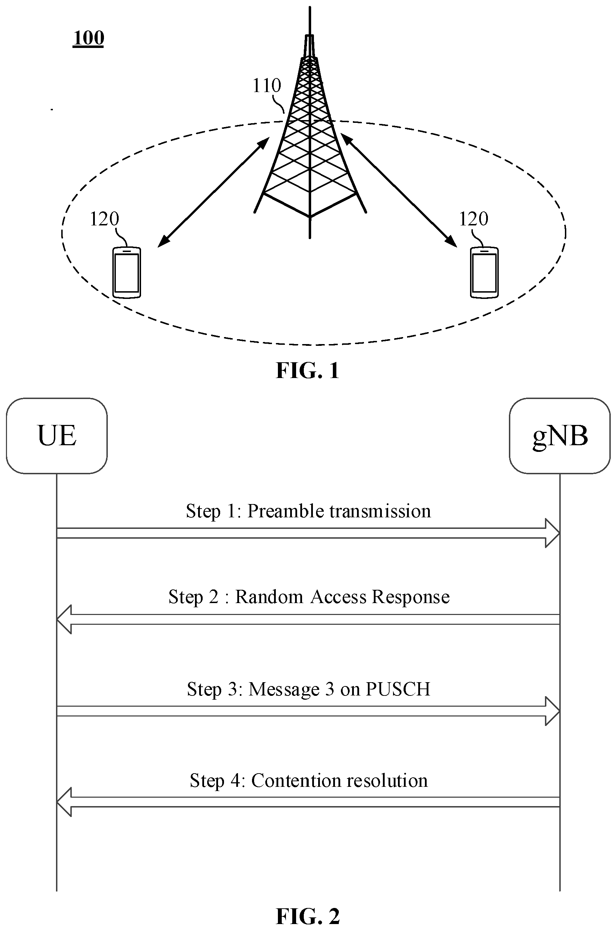

FIG. 1 illustrates exemplarily a communication system 100. The communication system includes a network device 110 and two terminal devices 120. In one embodiment, the communication system 100 may include multiple network devices 110, and another number of terminal devices 120 may be included within the coverage range of each network device 110, which is not limited in the embodiment of the present disclosure.

In one embodiment, the communication system 100 may further include other network entities such as a Mobility Management Entity (MME), an Access and Mobility Management Function (AMF), and the embodiment of the present disclosure is not limited thereto.

The network device may further include an access network device and a core network device. That is, the wireless communication system further includes multiple core networks for communicating with access network devices. The access network device may be an evolutional node B (eNB or e-NodeB for short), a macro base station, a micro base station (also referred to as a "small base station"), a pico base station, an access point (AP), a transmission point (TP), or a new generation node B (gNodeB) in a long-term evolution (LTE) system, a next radio (NR) system, or an authorized auxiliary access long-term evolution (LAA-LTE) system.

It should be understood that a device having a communication function in the network/system in the embodiments of the present disclosure may be referred to as a communication device. Taking the communication system illustrated in FIG. 1 as an example, the communication device may include a network device and a terminal device having a communication function, and the network device and the terminal device may be specific devices in the embodiments of the present disclosure, which will not be described again here. The communication device may also include other devices in the communication system, such as network controllers, mobile management entities and other network entities, which are not limited in the embodiments of the present disclosure.

It is to be understood that the terms "system" and "network" are often used interchangeably herein. The term "and/or" herein is merely an association relationship that describes associated objects, and indicates that there may be three relationships, for example, A and/or B, which may indicate that A exists alone, A and B exists simultaneously, and B exists alone. In addition, the character "/" herein generally indicates that there is an "or" relationship between the associated objects.

It should be understood that the "indication" mentioned in the embodiments of the present disclosure may be a direct indication, an indirect indication, or an indication that there is an association relationship. For example, A indicates B, which may mean that A directly indicates B, e.g., B may be acquired by A. It may also be indicated that A indirectly indicates B, for example, A indicates C, and B may be acquired by C. It may also be indicated that there is an association relationship between A and B.

In the description of the embodiments of the present disclosure, the term "correspondence" may mean that there is a direct correspondence or an indirect correspondence between the two objects, or may mean that there is a correlation between the two objects, or may be a relationship between instruction and being instructed, configuration and being configured, or the like.

In order to facilitate understanding of the technical solutions of the embodiments of the present disclosure, the related technologies of the embodiments of the present disclosure will be described below, and the following related technologies may be arbitrarily combined with the technical solutions of the embodiments of the present disclosure as optional solutions, and all of them belong to the protection scope of the embodiments of the present disclosure.

In 5G systems, the random access procedure may employ a four-step procedure similar to LTE. An example of a four-step RACH process is illustrated in FIG. 2.

Step 1: PREAMBLE transmission. The UE sends a random access preamble sequence (message 1, MSG1) to a base station (gNB).

Step 2: After detecting that a UE has sent an access preamble, the base station sends a Random Access Response (RAR, that is, a message 2 (message 2, MSG2) to the UE to inform the UE of uplink resource information that may be used when sending the message 3 (message 3, MSG3), allocates a Temporary Radio Network Temporary Identifier (RNTI) to the UE, and provides a time advance command to the UE.

Step 3: After receiving the Random Access Response (RAR), the UE sends an MSG3 message, such as MSG3 on the PUSCH, in the uplink resource specified by the RAR message, and the MSG 3 may carry UE-specific temporary identification information.

Step 4: The base station sends an MSG4 message to the UE, which may include a contention resolution message, and allocates an uplink transmission resource to the UE. When the UE receives the MSG4 sent by the base station, the UE detects whether the UE-specific temporary identification sent by the UE in the MSG3 is included in the contention resolution message sent by the base station. If it is included, it indicates that the UE random access procedure is successful; and otherwise, it is considered that the random procedure has failed, and the UE needs to start the random access procedure again from the first step.

In the above random access procedure, MSG2 (RAR), MSG3 (uplink), and MSG4 (downlink) will involve the requirement of corresponding data information to be transmitted on corresponding uplink and downlink channels. In addition, due to the complexity and time-varying nature of the wireless channel environment, in the above-mentioned process, the transmitter needs to allocate information data symbols and specific pilot symbols (reference signals) at different resource locations, such as DeModulation Reference Signal (DMRS) and other reference signals for the receiver to make channel estimation, so as to effectively analyze the above-mentioned information such as MSG2, MSG3, and MSG4 sent on the wireless channel.

In the related solution, the data and the pilot transmission involved in the random access procedure are orthogonally placed on the time and frequency domain resources. That is, when the total transmission resources are constant, an increase in the resource overhead required by the pilot means that the resources for transmitting data are reduced, and the utilization rate of data transmission resources is relatively low. For the initial access procedure, the transmission resources are very limited, and it is necessary to minimize the occupation of radio resources by data transmission during random access procedure.

The communication method according to the embodiments of the present disclosure may include a scheme in which data and pilot(s) (reference signal(s)) are transmitted in a superimposed manner in a non-orthogonal form during a random access procedure. Further, the communication method according to the embodiments of the present disclosure may further include a requirement for the post-processing capability of data and superimposed pilot transmission. It is not necessarily that all receiving ends (e.g., a UE or a base station) are capable of supporting the superimposed transmission scheme, so in the actual system, the determination of the usage conditions and usage capabilities of the superimposed transmission scheme may be introduced, so that the understanding of data and pilot transmission associated with data and reception schemes in the random access procedure is consistent at both sending and receiving ends.

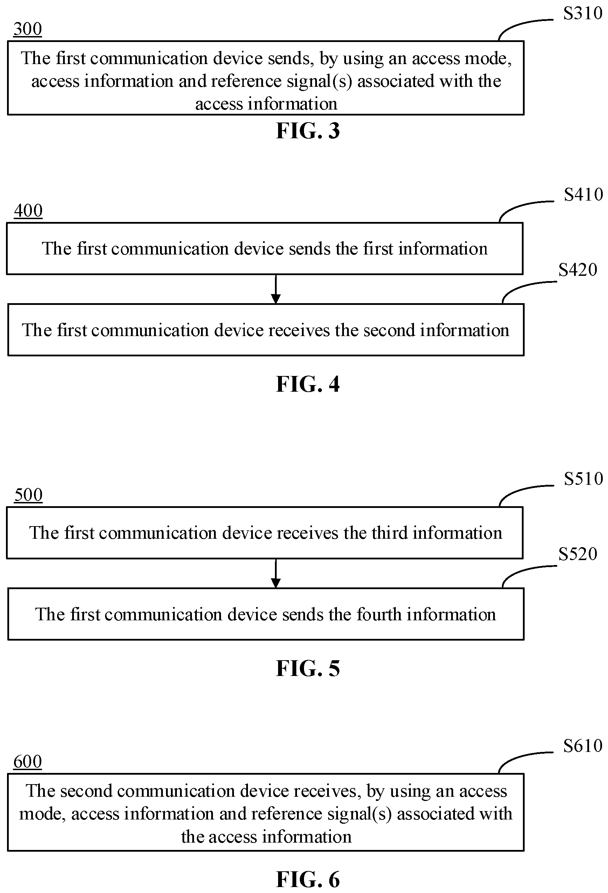

FIG. 3 is a schematic flowchart of a communication method 300 according to an embodiment of the present disclosure. The method may optionally be applied to the system illustrated in FIG. 1, but is not limited thereto. The method includes at least a portion of the following.

In operation S310, the first communication device sends access information and reference signal(s) associated with the access information by using an access mode.

In the embodiments of the present disclosure, in the random access (or random access procedure), the first communication device may transmit, by using an access mode, access information and reference signal(s) associated with the access information to the second communication device in a superimposed manner. The reference signal may be referred to as a pilot. For example, the first communication device sends access information to the second communication device, and the first communication device sends reference signal(s) associated with the access information to the second communication device. The time-frequency domain resources used to send the access information and the reference signal are completely or partially the same.

In one embodiment, the access information is information in random access. In the embodiments of the present disclosure, if the first communication device is a terminal device such as UE, the second communication device may be a network device such as a base station. In the uplink direction, the terminal device may send uplink access information in the random access and uplink reference signal(s) associated with the access information to the network device by using the access mode.

In the embodiments of the present disclosure, if the first communication device is a network device, the second communication device may be a terminal device. In the downlink direction, the network device may send downlink access information in the random access and the downlink reference signal(s) associated with the access information to the terminal device by using the access mode.

FIG. 4 is a schematic flowchart of a communication method 400 according to another embodiment of the present disclosure. The method may include one or more features of the method described above. In one embodiment, the first communication device is a network device, the access mode is the first access mode, the access information is the first access information, and the reference signal(s) is the first reference signal(s).

In one embodiment, the first access information includes at least one of: a Random Access Response (RAR) message (MSG2) in four-step random access; a contention resolution message (MSG4) in the four-step random access; a RAR message (MSG2) in non-contention two-step random access; or a downlink message (MSGB) in two-step random access.

In one embodiment, the first reference signal includes at least one of: a reference signal that needs to be transmitted for the RAR message (MSG2); a reference signal on a Physical Downlink Control Channel (PDCCH) carrying the RAR message (MSG2); a reference signal on a Physical Downlink Shared Channel (PDSCH) carrying the RAR message (MSG2); a reference signal that needs to be transmitted for the contention resolution message (MSG4); a reference signal on the PDCCH carrying the contention resolution message (MSG4); a reference signal on the PDSCH carrying the contention resolution message (MSG4); a reference signal that needs to be transmitted for the downlink message (MSGB) in the two-step random access; a reference signal on a PDCCH carrying the downlink message (MSGB) in the two-step random access; or a reference signal on a PDSCH carrying the downlink message (MSGB) in the two-step random access.

For example, in the four-step random access, after receiving the preamble message (MSG1) from the second communication device such as the terminal device, the first communication device such as the network device may transmit the RAR message (MSG2) and the reference signal that needs to be transmitted for the RAR message to the terminal device in a superimposed manner in a non-orthogonal form. After receiving the MSG 3 from the terminal device, the network device may transmit the contention resolution message (MSG4) and the reference signal on the PDCCH carrying the contention resolution message to the terminal device in a superimposed manner in a non-orthogonal form.

For another example, in the non-contention two-step random access, after receiving the preamble message (MSG1) from the terminal device, the network device may transmit the RAR message (MSG2) and the reference signal on the PDCCH carrying the RAR message to the terminal device in a superimposed manner in a non-orthogonal form.

For another example, in the two-step random access, after receiving the preamble message (MSG1) from the terminal device, the network device may transmit the downlink message (MSGB) in the two-step random access and the reference signal on the PDSCH carrying the downlink message to the terminal device in a superimposed manner in a non-orthogonal form.

In one embodiment, in the first access mode, the first access information and the first reference signal(s) are transmitted on the same time-frequency domain transmission resource. In the embodiments of the present disclosure, the first communication device such as a network device may transmit the first access information and the first reference signal(s) to the second communication device such as a terminal device by using the first access mode on the same time-frequency domain transmission resource(s). The same time-frequency domain transmission resource(s) may include completely or partially the same time-frequency transmission resource(s), may include completely or partially the same frequency domain transmission resource(s), may include completely or partially the same time-frequency transmission resource(s) and frequency domain transmission resource(s). The time-frequency transmission resource(s) may include one or more symbols, and the frequency-domain transmission resource(s) may include resource block(s), subcarrier(s), or the like.

In one embodiment, the transmission resource(s) of the first access information and the transmission resource(s) of the first reference signal(s) are completely or partially the same. In the embodiments of the present disclosure, the first communication device may transmit the first access information and the first reference signal(s) by using the first time domain resource and the first frequency domain resource. The first access information may occupy a part or all of the first time domain resource(s) and a part or all of the first frequency domain resource(s). The first reference signal may occupy a part or all of the first time domain resource(s) and a part or all of the first frequency domain resource(s). For example, the first time domain resources include OFDM symbol 0 to OFDM symbol 13, and the first frequency domain resources include RB 1 to RB 12. The first access information occupies symbols 1, 3, 5, 6, 9, 11 and 13, and the first reference signal occupies symbols 3, 4 and 5, and/or the first access information occupies RB1 to RB8, the first reference signal occupies RB5 and RB6, or the first reference signal occupies particular subcarrier(s) of RB1 to RB8, such as subcarrier n.

In one embodiment, at least one of the first access mode, a transmission scheme of the first access information, a transmission scheme of the first reference signal, a usage scope in which the first access mode is applicable to the first access information, configuration information of the first reference signal, or whether the first access mode is supported is predefined.

In one embodiment, the method further includes the following operation. In operation S410, the first communication device sends the first information. The first information is used for indicating at least one of the first access mode, the transmission scheme of the first access information, the transmission scheme of the first reference signal, the usage scope in which the first access mode is applicable to the first access information, the configuration information of the first reference signal, or whether the first access mode is supported.

In the embodiments of the present disclosure, the first access mode, the transmission scheme of the first access information, the transmission scheme of the first reference signal, the usage scope in which the first access mode is applicable to the first access information, the configuration information of the first reference signal(s), and whether the first access mode is supported may be indicated by the same first information, or may be indicated by multiple pieces of first information. That is, the first communication device, such as a network device, may transmit one or more first messages to the second communication device, such as a terminal device. If multiple first messages are transmitted, the first messages including different indication contents may be sent according to demands at different times.

In one embodiment, the first information is carried by at least one of a broadcast message, a Radio Resource control (RRC) message, a Downlink control information (DCI) message, a Downlink message in random access, a PDCCH, a PDSCH, or a downlink channel dedicated to Artificial Intelligence/Machine Learning (AI/ML). For example, a downlink message in a random access may include MSG2 or MSG4 in the four-step random access, MSG2 in non-contention two-step random access, or MSGB in two-step random access.

In the embodiments of the present disclosure, the first communication device such as the network device may actively send the first information to the second communication device such as the terminal device, or may send the first information to the second communication device in response to a request from the second communication device.

For example, the first information may indicate a specific content of the first access mode, or may indicate at least one of whether the first access mode is used, a type of the first access mode to be used, a configuration situation (configuration information) of the first access mode to be used, or the like. An example in which the first information indicates the first access mode may include that the network device indicates to the terminal device, through the broadcast message SIB1 or SIB2, that the first access information and the first reference signal are transmitted on the same time-frequency domain transmission resource(s). The type of the first access mode to be used may include different second access information, different second pilots associated with different second access information transmission, or the like.

For another example, the first information may indicate a specific content of the transmission scheme of the first access information, or may indicate an identification of the transmission scheme of the first access information. An example in which the first information indicates the transmission scheme of the first access information may include that the network device indicates the transmission scheme of the first access information to the terminal device through the RRC. The specific content of the transmission scheme of the first access information may include different second access information, different second pilots associated with the second access information transmission, combinations of different transmission configurations (resources, power, sequences, modulation, etc.), and the like.

As another example, the first information may indicate a specific content of the transmission scheme of the first reference signal, or may indicate an identification of the transmission scheme of the first reference signal. An example in which the first information indicates the transmission scheme of the first reference signal may include that the network device indicates the transmission scheme of the first reference signal to the terminal device through a PDCCH (including DCI).

In one embodiment, the method further includes the following operation. In the operation S420, the first communication device receives the second information. The second information is used for indicating or requesting configuration of at least one of the first access mode, a transmission scheme of the first access information, a transmission scheme of the first reference signal, a usage scope in which the first access mode is applicable to the first access information, configuration information of the first reference signal, or whether the first access mode is supported.

In the embodiments of the present disclosure, the first communication device, such as the network device, may receive the second information from the second communication device, such as the terminal device. If the second information is used to request the network device to configure the first access mode to the terminal device, the network device may send the first information to the terminal device according to the second information. Therefore, the operation S420 may be before the operation S410, or the operation S420 is not be limited in timing with the operation S410.

In one embodiment, the second information is carried by at least one of device capability reporting information, an RRC message, a UCI message, an uplink message in random access, a PUCCH, a PUSCH, an uplink channel dedicated to AI/ML. For example, the device capability reporting information includes UE capability reporting information. As another example, the uplink message in the random access may include MSG1 or MSG3 in the four-step random access, MSG1 in non-contention two-step random access, or MSGA in two-step random access.

For example, the second information may indicate or request configuration of the specific content of the first access mode, or may indicate at least one of whether the first access mode is used, a type of the first access mode to be used, a configuration situation (configuration information) of the first access mode to be used, and the like. An example in which the second information indicates the first access mode may include that the network device receives UE capability reporting information sent by the terminal device, and the UE capability reporting information requests the network device to configure that the first access information and the first reference signal are transmitted on the same time-frequency domain transmission resource(s).

For another example, the second information may indicate a specific content of the transmission scheme of the first access information, or may indicate an identification of the transmission scheme of the first access information. An example in which the second information indicates the transmission scheme of the first access information may include that the network device receives an RRC from the terminal device, and the RRC message may indicate the transmission scheme of the first access information.

As another example, the second information may indicate a specific content of the transmission scheme of the first reference signal, or may indicate an identification of the transmission scheme of the first reference signal. An example in which the second information indicates the transmission scheme of the first reference signal may include that the network device receives a PUCCH (including a UCI) from the terminal device, and the UCI may indicate the transmission scheme of the first reference signal.

In one embodiment, the usage scope in which the first access mode is applicable to the first access information includes at least one of: the first reference signal transmitted for the RAR message is transmitted by using the first access mode; the first reference signal on the PDCCH of the RAR message is transmitted by using the first access mode; the first reference signal on the PDSCH of the RAR message is transmitted by using the first access mode; the first reference signal transmitted for the contention resolution message is transmitted by using the first access mode; the first reference signal on the PDCCH of the contention resolution message is transmitted by using the first access mode; the first reference signal on the PDSCH of the contention resolution message is transmitted by using the first access mode; the first reference signal transmitted for the downlink message in the two-step random access is transmitted by using the first access mode; the first reference signal on the PDCCH of the downlink message in the two-step random access is transmitted by using the first access mode; or the first reference signal on the PDSCH of the downlink message in the two-step random access is transmitted by using the first access mode.

In one embodiment, the configuration information of the first reference signal(s) includes at least one of: transmission resource(s) of the first reference signal(s); transmission power(s) of the first reference signal(s); sequence information(s) of the first reference signal(s); modulation information of the first reference signal(s).

For example, the transmission resource(s) of the first reference signal(s) may include one or more symbols within a time domain transmission range of the first access information; and/or one or more resource blocks or subcarriers within a frequency domain transmission range of the first access information.

As another example, the transmission power(s) of the first reference signal(s) may include that the first reference signal transmission may use a fixed first reference signal transmission power, or a fixed ratio or difference between the first reference signal transmission power and the reference power. The reference power may be the total power of the first access information transmission and the first reference signal transmission, or the power of the first access information transmission, or a specific reference power (such as a transmission power of the SSB, a transmission power of the PBCH, a transmission power of the DMRS of the PBCH, or the like).

FIG. 5 is a schematic flowchart of a communication method 500 according to another embodiment of the present disclosure. The method may include one or more features of the method described above. In one embodiment, the first communication device is a terminal device, the access mode is the second access mode, the access information is the second access information, and the reference signal(s) is the second reference signal(s).

In one embodiment, the second access information includes at least one of: a preamble message (MSG1) in a four-step random access; an uplink message (MSG3) in four-step random access; a preamble message (MSG1) in a non-contention two-step random access; or an uplink message (MSGA) in two-Step random access.

In one embodiment, the second reference signal includes at least one of the following: a reference signal that needs to be transmitted for the preamble message (MSG1); a reference signal on the PDCCH carrying the uplink message (MSG3) in the four-step random access; a reference signal on the PDSCH carrying the uplink message (MSG3) in the four-step random access; a reference signal that needs to be transmitted for the uplink message (MSGA) in the two-step random access; a reference signal on a PDCCH carrying the uplink message (MSGA) in the two-step random access; or a reference signal on a PDSCH carrying the uplink message (MSGA) in the two-step random access.

For example, in the four-step random access, after the first communication device such as a terminal device transmits a preamble message (MSG1) and a reference signal (or data) that needs to be transmitted for the preamble message (MSG1) to the second communication device such as a network device in a superimposed manner in a non-orthogonal form, the terminal device may receive a RAR message (MSG2) and a reference signal that needs to be transmitted for the RAR message that are transmitted in a superimposed manner from the network device. After the terminal device sends the MSG3 and the reference signal on the PDCCH carrying the MSG3 to the network device in a non-orthogonal form, the terminal device may receive a contention resolution message (MSG4) and the reference signal on the PDCCH carrying the contention resolution message that are transmitted in a superimposed manner from the network device.

For another example, in the non-contention two-step random access, after the terminal device transmits, to the network device, the preamble message (MSG1) and data that are transmitted in a superimposed manner in a non-orthogonal form, the terminal device may receive the RAR message (MSG2) and the reference signal on the PDCCH carrying the RAR message that are transmitted in a superimposed manner from the network device.

For another example, in the two-step random access, after the terminal device transmits, to the network device, an uplink message (MSGA) and data that are transmitted in a superimposed manner by using a non-orthogonal form, the terminal device may receive a downlink message (MSGB) in the two-step random access and a reference signal on the PDSCH carrying the downlink message that are transmitted in a superimposed manner from the network device.

In one embodiment, in the second access mode, the second access information and the second reference signal are transmitted on the same time-frequency domain transmission resource(s).

In one embodiment, the transmission resource(s) of the second access information and the transmission resource(s) of the second reference signal are completely or partially the same. In the embodiments of the present disclosure, the first communication device such as a terminal device may transmit the second access information and the second reference signal to the second communication device such as a network device by using the second access mode on the same time-frequency domain transmission resource(s). The same time-frequency domain transmission resource(s) may include completely or partially the same time-frequency transmission resource(s), may include completely or partially the same frequency domain transmission resource(s), may include completely or partially the same time-frequency transmission resource(s) and frequency domain transmission resource(s). The time-frequency transmission resource(s) may include one or more symbols, and the frequency-domain transmission resource(s) may include resource block(s), subcarrier(s), or the like.

In one embodiment, at least one of the second access mode, a transmission scheme of the second access information, a transmission scheme of the second reference signal, a usage scope in which the second access mode is applicable to the second access information, configuration information of the second reference signal(s), or whether the second access mode is supported is predefined.

In the embodiment of the present disclosure, the first communication device may transmit the second access information and the second reference signal by using the second time domain resource(s) and the second frequency domain resource(s). The second access information may occupy a part or all of the second time domain resource(s) and a part or all of the second frequency domain resource(s). The second reference signal may occupy a part or all of the second time domain resource(s) and a part or all of the second frequency domain resource(s). For example, the second time domain resources include OFDM symbol 9 to OFDM symbol 13, and the second frequency domain resources include RB 13 to RB 16. The second access information occupies symbols 9 to 13 and the second reference signal occupies symbols 9 and 11, and/or, the second access information occupies RB13 to RB16, and the second reference signal occupies symbols RB13 and RB16.

In one embodiment, the method further includes the following operation. In operation S510, the first communication device receives the third information. The third information is used for indicating at least one of the second access mode, the transmission scheme of the second access information, the transmission scheme of the second reference signal, the usage scope in which the second access mode is applicable to the second access information, the configuration information of the second reference signal, or whether the second access mode is supported.

In the embodiments of the present disclosure, the second access mode, the transmission scheme of the second access information, the transmission scheme of the second reference signal, the use scope in which the second access mode is applicable to the second access information, the configuration information of the second reference signal, and whether the second access mode is supported may be indicated by the same third information, or may be indicated by multiple pieces of third information. That is, the first communication device, such as a terminal device, may transmit one or more pieces of third information to the second communication device, such as a network device. If multiple third messages are transmitted, third messages including different indication contents may be sent according to demands at different times.

In one embodiment, the third information is carried by at least one of a broadcast message, an RRC message, a DCI message, a downlink message in random access, a PDCCH, a PDSCH, a downlink channel dedicated to AI/ML.

In the embodiment of the present disclosure, the first communication device, such as the terminal device, may receive the third information actively sent from the second communication device, such as the network device, and may request the second communication device to send the third information.

For example, the third information may indicate a specific content of the second access mode, or may indicate at least one of whether the second access mode is used, a type of the second access mode to be used, a configuration situation (configuration information) of the second access mode to be used, or the like. An example in which the third information indicates the second access mode may include that the terminal device may receive a broadcast message SIB1 or SIB2 sent by the network device, and SIB1 or SIB2 may indicate that the second access information and the second reference signal are transmitted on the same time-frequency domain transmission resource(s).

For another example, the third information may indicate a specific content of a transmission scheme of the second access information, or may indicate an identification of a transmission scheme of the second access information. An example in which the third information indicates a transmission scheme of the second access information may include that the terminal device may receive an RRC transmitted by the network device, and the RRC may indicate a transmission scheme of the second access information.

As another example, the third information may indicate a specific content of the transmission scheme of the second reference signal, or may indicate an identification of the transmission scheme of the second reference signal. An example in which the third information indicates the transmission scheme of the second reference signal may include that the terminal device may receive a PDCCH (including DCI) sent by the network device, and the DCI may indicate the transmission scheme of the second reference signal.

In one embodiment, the method further includes the following operation. In operation S520, the first communication device sends the fourth information. The fourth information is used for indicating or requesting configuration of at least one of the second access mode, the transmission scheme of the second access information, the transmission scheme of the second reference signal, the usage scope in which the second access mode is applicable to the second access information, the configuration information of the second reference signal(s), or whether the second access mode is supported.

In the embodiments of the present disclosure, the first communication device such as the terminal device may send the fourth information to the second communication device such as the network device. If the fourth information is used to request the network device to configure the second access mode to the terminal device, the network device may send the third information to the terminal device according to the fourth information. Therefore, the operation S520 may be before the operation S510, or the operation S520 is not be limited in timing with the operation S510.

In one embodiment, the fourth information is carried by at least one of device capability reporting information, an RRC message, a UCI message, an uplink message in random access, a PUCCH, a PUSCH, an uplink channel dedicated to AI/ML.

In one embodiment, the usage scope in which the second access mode is applicable to the second access information includes at least one of: the second reference signal transmitted for the preamble message is transmitted by using the second access mode; the second reference signal on the PDCCH of the uplink message in the four-step random access is transmitted by using the second access mode; the second reference signal on the PDSCH of the uplink message in the four-step random access is transmitted by using the second access mode; the second reference signal transmitted for the uplink message in the two-step random access is transmitted by using the second access mode; the second reference signal on the PDCCH of the uplink message in the two-step random access is transmitted by using the second access mode; or the second reference signal on the PDSCH of the uplink message in the two-step random access is transmitted by using the second access mode.

For example, the fourth information may indicate or request configuration of a specific content of the second access mode, or may indicate at least one of whether the second access mode is used, a type of the second access mode to be used, a configuration situation (configuration information) of the second access mode to be used, or the like. An example in which the fourth information indicates the second access mode may include that the terminal device sends UE capability reporting information to the network device, and the UE capability reporting information requests the network device to configure that the second access information and the second reference signal are transmitted on the same time-frequency domain transmission resource(s).

For another example, the fourth information may indicate a specific content of the transmission scheme of the second access information, or may indicate an identification of the transmission scheme of the second access information. An example in which the fourth information indicates the transmission scheme of the second access information may include that the terminal device sends an RRC to the network device, and the RRC message may indicate the transmission scheme of the first access information.

As another example, the fourth information may indicate a specific content of the transmission scheme of the second reference signal, or may indicate an identification of the transmission scheme of the second reference signal. An example in which the fourth information indicates the transmission scheme of the second reference signal may include that the terminal device sends a PUCCH (including a UCI) to the network device, and the UCI may indicate the transmission scheme of the second reference signal.

In one embodiment, the configuration information of the second reference signal(s) includes at least one of: transmission resource(s) of the second reference signal(s); transmission power(s) of the second reference signal(s); sequence information of the second reference signal(s); or modulation information of the second reference signal(s).

For example, the transmission resource(s) of the second reference signal(s) may include one or more symbols within a time domain transmission range of the second access information; and/or one or more resource blocks or subcarriers within a frequency domain transmission range of the second access information.

For another example, the transmission power(s) of the second reference signal(s) may include, that the second reference signal transmission may use a fixed second reference signal transmission power, or a fixed ratio or difference between the second reference signal transmission power to the reference power. The reference power may be the total power of the second access information transmission and the second reference signal transmission, or the power of the second access information transmission, or a specific reference power (such as a transmission power of the SSB, a transmission power of the PBCH, a transmission power of the DMRS of the PBCH, or the like).

FIG. 6 is a schematic flowchart of a communication method 600 according to an embodiment of the present disclosure. The method may optionally be applied to the system illustrated in FIG. 1, but is not limited thereto. The method includes at least a portion of the following.

In operation S610, the second communication device receives access information and reference signal(s) associated with the access information by using an access mode.

In one embodiment, the access information is information in random access.

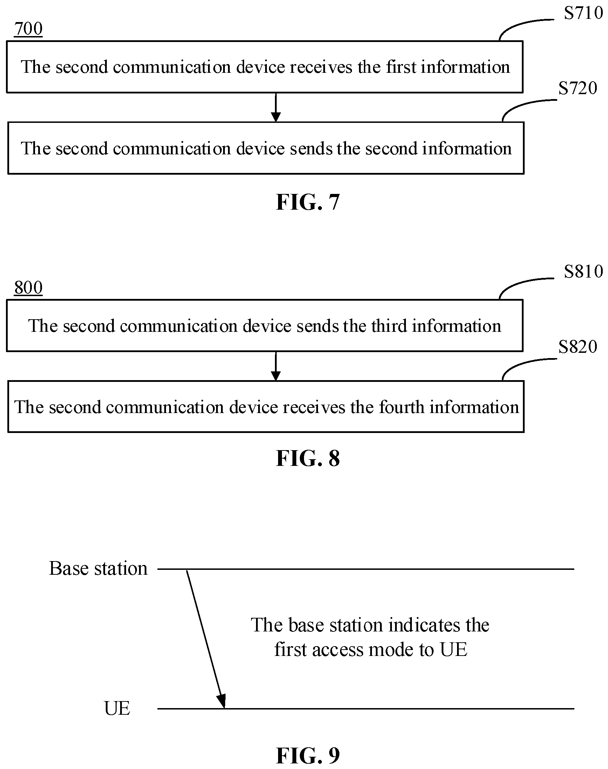

FIG. 7 is a schematic flowchart of a communication method 700 according to another embodiment of the present disclosure. The method may include one or more features of the method described above. In one embodiment, the second communication device is a terminal device, the access mode is the first access mode, the access information is the first access information, and the reference signal(s) is the first reference signal(s).

In one embodiment, the first access information includes at least one of: a RAR message in a four-step random access; contention resolution message in the four-step random access; the RAR message in non-contention two-step random access; or downlink message in two-step random access.

In one embodiment, the first reference signal(s) includes at least one of: a reference signal that needs to be transmitted for the RAR message; a reference signal on a PDCCH carrying the RAR message; a reference signal on a PDSCH carrying the RAR message; a reference signal that needs to be transmitted for the contention resolution message; a reference signal on a PDCCH carrying the contention resolution message; a reference signal on a PDSCH carrying the contention resolution message; a reference signal that needs to be transmitted for the downlink message in the two-step random access; a reference signal on a PDCCH carrying the downlink message in the two-step random access; a reference signal on a PDSCH carrying the downlink message in the two-step random access.

In one embodiment, in the first access mode, the first access information and the first reference signal are transmitted on same time-frequency domain transmission resource(s).

In one embodiment, transmission resource(s) of the first access information and transmission resource(s) of the first reference signal are completely or partially the same.

In one embodiment, at least one of the first access mode, a transmission scheme of the first access information, a transmission scheme of the first reference signal, a usage scope in which the first access mode is applicable to the first access information, the configuration information of the first reference signal, or whether the first access mode is supported is predefined.

In one embodiment, the method further includes the following operation. In the operation S710, the second communication device receives the first information. The first information is used for indicating at least one of the first access mode, a transmission scheme of the first access information, a transmission scheme of the first reference signal, a usage scope in which the first access mode is applicable to the first access information, configuration information of the first reference signal(s), and whether the first access mode is supported.

In one embodiment, the first information is carried by at least one of a broadcast message, a RRC message, a DCI message, a downlink message in random access, a PDCCH, a PDSCH, a downlink channel dedicated to AI/ML.

In one embodiment, the method further includes the following operation. In operation S720, the second communication device sends the second information. The second information is used for indicating or requesting configuration of at least one of the first access mode, the transmission scheme of the first access information, the transmission scheme(s) of the first reference signal(s), a usage scope in which the first access mode is applicable to the first access information, configuration information of the first reference signal(s), and whether the first access mode is supported. The operation S720 may be before the operation S710, or the operation S720 is not be limited in timing with the operation S710.

In one embodiment, the second information is carried by at least one of device capability reporting information, an RRC message, a UCI message, an uplink message in random access, a PUCCH, a PUSCH, or an uplink channel dedicated to AI/ML.

In one embodiment, the usage scope in which the first access mode is applicable to the first access information includes at least one of: the first reference signal transmitted for the RAR message is transmitted by using a first access mode; the first reference signal on the PDCCH of the RAR message is transmitted by using the first access mode; the first reference signal on the PDSCH of the RAR message is transmitted by using the first access mode; the first reference signal transmitted for the contention resolution message is transmitted by using the first access mode; the first reference signal on the PDCCH of the contention resolution message is transmitted by using the first access mode; the first reference signal on the PDSCH of the contention resolution message is transmitted by using the first access mode; the first reference signal transmitted for the downlink message in the two-step random access is transmitted by using the first access mode; the first reference signal on the PDCCH of the downlink message in the two-step random access is transmitted by using the first access mode; or the first reference signal on the PDSCH of the downlink message in the two-step random access is transmitted by using the first access mode.

In one embodiment, the configuration information of the first reference signal(s) includes at least one of: transmission resource(s) of the first reference signal(s); transmission power(s) of the first reference signal(s); sequence information of the first reference signal(s); or modulation information of the first reference signal(s).

FIG. 8 is a schematic flowchart of a communication method 800 according to another embodiment of the present disclosure. The method may include one or more features of the method described above. In one embodiment, the second communication device is a network device, the access mode is the second access mode, the access information is the second access information, and the reference signal(s) is second reference signal(s).

In one embodiment, the second access information includes at least one of: a preamble message in a four-step random access; an uplink message in the four-step random access; a preamble message in a non-contention two-step random access; or an uplink message in two-step random access.

In one embodiment, the second reference signal(s) includes at least one of: a reference signal that needs to transmitted for the preamble message; a reference signal on a PDCCH carrying the uplink message in the four-step random access; a reference signal on a PDSCH carrying the uplink message in the four-step random access; a reference signal that needs to be transmitted for the uplink message in the two-step random access; a reference signal on a PDCCH carrying the uplink message in the two-step random access; or a reference signal on a PDSCH carrying the uplink message in the two-step random access.

In one embodiment, in the second access mode, the second access information and the second reference signal are transmitted on same time-frequency domain transmission resource(s).

In one embodiment, transmission resource(s) of the second access information and transmission resource(s) of the second reference signal are completely or partially the same.

In one embodiment, at least one of the second access mode, transmission scheme(s) of the second access information, transmission scheme(s) of the second reference signal(s), a usage scope in which the second access mode is applicable to the second access information, configuration information of the second reference signal(s), or whether the second access mode is supported is predefined.

In one embodiment, the method further includes the following operation. In operation S810, the second communication device sends the third information. The third information is used for indicating at least one of the second access mode, transmission scheme(s) of the second access information, transmission scheme(s) of the second reference signal(s), a usage scope in which the second access mode is applicable to the second access information, configuration information of the second reference signal(s), or whether the second access mode is supported.

In one embodiment, the third information is carried by at least one of a broadcast message, an RRC message, a DCI message, a downlink message in random access, a PDCCH, a PDSCH, or a downlink channel dedicated to AI/ML.

In one embodiment, the method further includes the following operation. In operation S820, the second communication device receives the fourth information. The fourth information is used for indicating or requesting configuration of at least one of the second access mode, transmission scheme(s) of the second access information, transmission scheme(s) of the second reference signal(s), a usage scope in which the second access mode is applicable to the second access information, configuration information of the second reference signal(s), or whether the second access mode is supported. The operation S820 may be before the operation S810, or the operation S820 is not be limited in timing with the operation S810.

In one embodiment, the fourth information is carried by at least one of device capability reporting information, an RRC message, a UCI message, an uplink message in random access, a PUCCH, a PUSCH, or an uplink channel dedicated to AI/ML.

In one embodiment, the usage scope in which the second access mode is applicable to the second access information includes at least one of: the second reference signal transmitted for the preamble message is transmitted by using the second access mode; the second reference signal on the PDCCH of the uplink message in the four-step random access is transmitted by using the second access mode; the second reference signal on the PDSCH of the uplink message in the four-step random access is transmitted by using the second access mode; the second reference signal transmitted for the uplink message in the two-step random access is transmitted by using the second access mode; the second reference signal on the PDCCH of the uplink message in the two-step random access is transmitted by using the second access mode; or the second reference signal on the PDSCH of the uplink message in the two-step random access is transmitted by using the second access mode.

In one embodiment, the configuration information of the second reference signal includes at least one of: transmission resource(s) of the second reference signal(s); transmission power(s) of the second reference signal(s); sequence information of the second reference signal(s); or modulation information of the second reference signal(s).

For specific examples that the second communication device performs methods 600, 700, and 800 of the present embodiments, the reference is made to the related descriptions of the second communication device in the above-described methods 300, 400, and 500, and will not be described again here for simplicity.

The communication method according to the embodiments of the present disclosure may include a scheme in which data and pilot(s) (reference signal(s)) are transmitted in a superimposed manner in a non-orthogonal form during a random access procedure. Specifically, in consideration of the uplink and downlink transmissions involved in the random access procedure, the differentiation of the support capabilities of the parties involved in the uplink and downlink transmissions for the superimposed transmission of initial access information and pilots associated with the initial access, as well as the optional combinations of different initial access information and pilot transmissions associated with the initial access, corresponding configuration and indication schemes are provided.

### Embodiment 1:

The base station transmits, by using the first access mode, the first access information and/or the first pilot(s) (reference signal(s)) associated with the first access information transmission.

The first access information may be one or more of the following:
(1) MSG 2 (RAR message), and/or MSG 4 (contention resolution message) in four-step random access;
(2) MSG 2 (RAR message) in non-contention two-step random access;
(3) MSG B in two-step random access.

The first access information may be control information, carried on a control channel, for the above-mentioned message (for example, scheduling and configuration information DCI, carried on a PDCCH, for MSG2, MSG4, MSGB data information).

Alternatively, the first access information may be data information, carried on a data channel, for the above-mentioned message (for example, MSG2, MSG4, MSGB data information carried on the PDSCH).

In the above description of the first access information, the first pilot(s) (reference signal(s)) associated with the first access information transmission includes one or more of the following pilots (reference signals):
(1) a pilot (reference signal) that needs to be transmitted for MSG2 (RAR message);
(2) a pilot (reference signal) on a PDCCH carrying MSG2 (RAR message);
(3) a Pilot (reference signal) on the PDSCH carrying MSG2 (RAR message);
(4) a Pilot (reference signal) that needs to be transmitted for MSG4 (access contention resolution message);
(5) a pilot (reference signal) on the PDCCH carrying MSG4 (contention resolution message);
(6) a pilot (reference signal) on a PDSCH carrying MSG4 (contention resolution message);
(7) a pilot (reference signal) that needs to be transmitted for MSGB (downlink message in two-step random access);
(8) a pilot (reference signal) on a PDCCH carrying the MSGB (downlink message in the two-step random access); or
(9) a pilot (reference signal) on PDSCH carrying the MSGB (downlink message in the two-step random access).

The feature of the first access mode may include that, in the first access mode, the first access information and the first pilot (reference signal) associated with the first access information transmission are transmitted on the same time-frequency domain transmission resource(s). The transmission resource(s) of the first access information and the transmission resource(s) of the first pilot (reference signal) associated with the first access information transmission are completely or partially the same. For example, the first access information (for example, DCI and/or data for MSG2, MSG4, MSGB) and the pilots (reference signals, e.g., DMRS signal) associated with the first access information transmission are simultaneously transmitted on the same time domain and frequency domain resource(s).

An example of the configuration of the first access mode is as follows: the protocol may predefine the first access mode, or the base station may indicate the first access mode to the UE. The protocol may predefine, or the base station may indicate a transmission scheme of the first pilot(s) (reference signal(s)) associated with the first access mode. The content predefined by the protocol or indicated by the base station may be a transmission scheme of the first access information and/or the first pilot(s) (reference signal(s)) associated with the first access information, or an identification corresponding to the above transmission scheme.

The base station may indicate the first access mode to the UE. As illustrated in FIG. 9, the base station may indicate the pilot transmission scheme associated with the first access information transmission by one or more of the following messages: (1) a broadcast message, such as Master information block (MIB), System information block (SIB) 1, SIB; (2) an RRC message; (3) a DCI message; (4) a downlink message during random access, such as MSG2; (5) a PDCCH; (6) a PDSCH; or (7) a downlink channel dedicated to AI/ML.

For example, in the broadcast SIB1 or SIB2, when configuring random access of the current cell, the base station indicates at least one of whether the first access mode is used, the type of the first access mode to be used, or the configuration situation of the first access mode to be used.

For example, in the broadcast SIB and/or the RRC message, when configuring random access of a neighbor cell, the base station indicates at least one of whether the first access mode is used, the type of the first access mode to be used, or the configuration situation of the first access mode to be used.

For example, in the MSG2, the base station indicates, for the MSG4, at least one of whether the first access information is transmitted by using the first access mode, the type of the first access mode to be used, or the configuration situation of the first access mode to be used.

For example, in the PDCCH (DCI) of the MSG2, the base station indicates at least one of the PDSCH (data) of the MSG 2, the PDCCH (DCI) of the MSG 4, the PDSCH (data) of the MSG 4, whether the first access information is transmitted by using the first access mode, the type of the first access mode to be used, or the configuration situation of the first access mode to be used.

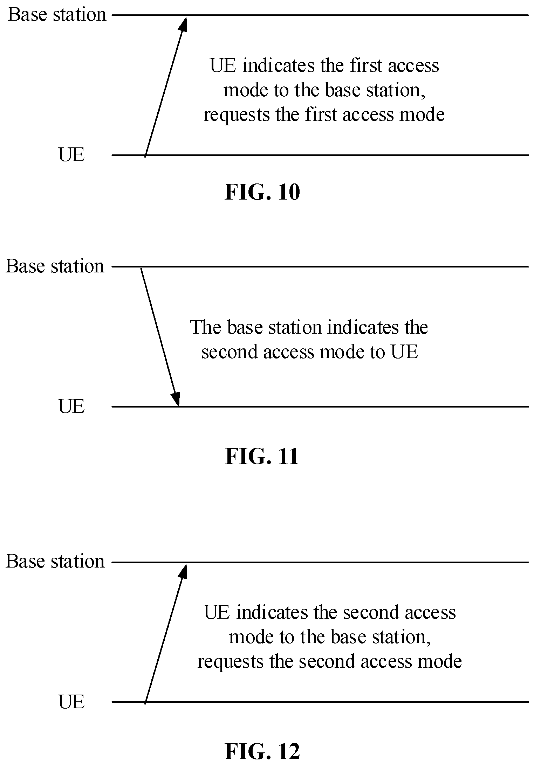

The UE may indicate and/or request the first access mode to the base station. As illustrated in FIG. 10, the UE may indicate and request a pilot transmission scheme associated with the first access information transmission by one or more of the following messages: (1) UE capability reporting indicating that the UE supports the first access mode, (2) a RRC message, (3) a UCI message, (4) an uplink message during random access, such as MSG1 (for example, the transmission resource location(s) and/or a specific sequence of MSG1, the MSG1 may be used to indicate that the base station may use the first access mode, for example, one or more of MSG2, MSG4, and MSGB is transmitted by using the first access model), (5) a PUCCH, (6) a PUSCH, or (7) an uplink channel dedicated to AI/ML.

For example, in the MSG1 (PREAMBLE transmission), the UE indicates at least one of whether the first access information is transmitted by using the first access mode for the MSG2 and/or the MSG4 and/or the MSGB, the type of the first access mode to be used, or a configuration situation of the first access mode to be used.

For example, in the MSG3 (PREAMBLE transmission), the UE indicates at least one of whether the first access information is transmitted by using the first access mode for the MSG 4, the type of the first access mode to be used, or a configuration situation of the first access mode to be used.

In the at least one of the protocol predefining the first access mode, the base station configuring the first access mode to the UE, or the UE indicating the first access mode to the base station and/or the UE requesting the base station to configure the first access mode, the usage scope in which the first access mode is applicable to the first access information may be predefined or configured or requested. For example, the first access mode is applicable to one or more of the following scopes:
(1) a pilot transmitted for MSG2 (RAR message) is transmitted by using the first access mode;
(2) a pilot on the PDCCH of MSG2 (RAR message) is transmitted by using the first access mode;
(3) a pilot on the PDSCH of MSG2 (RAR message) is transmitted by using the first access mode;
(4) a pilot transmitted for the MSG4 (contention resolution message) is transmitted by using the first access mode;
(5) a pilot on the PDCCH of MSG4 (contention resolution message) is transmitted by using the first access mode;
(6) a pilot on the PDSCH of MSG4 (contention resolution message) is transmitted by using the first access mode;
(7) a pilot transmitted for the MSGB (downlink message in two-step random access) is transmitted by using the first access mode;
(8) a pilot on the PDCCH of the MSGB (downlink message in two-step random access) is transmitted by using the first access mode; or
(9) a pilot on the PDSCH of MSGB (downlink message in two-step random access) is transmitted by using the first access mode.

In the at least one of the protocol predefining the first access mode, the base station configuring the first access mode to the UE, or the UE indicating and/or requesting to configure the first access mode, the specific configuration information of the first pilot(s) (reference signal(s)) associated with the first access information transmission in the first access mode may be predefined or configured or requested. For example, the configuration information of the first pilot(s) (reference signal(s)) may include one or more pieces of the following information:
(1) transmission resource(s) of the first pilot(s) (reference signal(s)) associated with the first access information transmission, for example, one or more symbols in the time domain transmission range of the first access information in the time domain, and/or one or more resource blocks or subcarriers in the frequency domain transmission range of the first access information in the frequency domain.
(2) transmission power(s) of the first pilot(s) (reference signal(s)) associated with the first access information transmission. For example, the first pilot(s) (reference signal(s)) transmission associated with the first access information transmission using the first access mode uses a fixed first pilot (reference signal) transmission power, or a fixed ratio or difference between the first pilot (reference signal) transmission power and the reference power. The reference power may be the total power of the first access information transmission and the first pilot transmission, the power of the first access information transmission, or a specific reference power (such as the transmission power of the SSB, the transmission power of the PBCH, the transmission power of the DMRS of the PBCH, or the like). The power information revolved in the first power allocation scheme may indicate an absolute power magnitude or a relative power magnitude in db (decibels), dbm (decibels milliwatts), or the like.
(3) sequence information of the first pilot(s) (reference signal(s)) associated with the first access information transmission, for example, gold sequence, ZC sequence, m sequence (longest linear feedback Shift register sequence), all-1 sequence, or specific sequences that have been modulated by modulation methods such as Quadrature Phase Shift Keying (QPSK), 16 Quadrature Amplitude Modulation (16QAM), 64 Quadrature Amplitude Modulation (64QAM). Another example is from different AI/ML pilot sequence training results.
(4) modulation information of the first pilot(s) (reference signal(s)) associated with the first access information transmission, for example, modulation methods such as QPSK, 16QAM, and 64QAM, or modulation information and/or processing methods in which modulation results such as QPSK, 16QAM, and 64QAM are subjected to processing such as offset, rotation, scaling, or the like.

### Embodiment 2:

Similar to Embodiment 1, the present embodiment may include processing of the uplink signal: the UE transmits, by using the second access mode, the second access information and/or the second pilot(s) (reference signal(s)) associated with the second access information transmission.

The second access information may be one or more of the following:
(1) MSG 1 (PREAMBLE message) and/or MSG 3 (uplink message in RACH procedure) in four-step random access;
(2) MSG 1 (PREAMBLE message) in non-contention two-step random access; or
(3) MSG A in two-step random access.

The second access message may be control information, carried on a control channel, for the above-mentioned message (for example, scheduling and configuration information UCI, carried on a PUCCH, for MSG3, MSGA data information).

Alternatively, the second access message may be data information, carried on a data channel, for the above-mentioned message (for example, MSG3, MSGA data information carried on the PUSCH).

In the above description of the second access information, the second pilot(s) (reference signal(s)) associated with the second access information transmission includes one or more of the following pilots (reference signals):
(1) a pilot (reference signal) that needs to be transmitted for MSG1 (PREAMBLE message);
(2) a pilot (reference signal) on a PUCCH carrying MSG3 (uplink message in RACH procedure);
(3) a pilot (reference signal) on a PUSCH carrying MSG3 (uplink message in RACH procedure);
(4) a pilot (reference signal) that needs to be transmitted for MSGA (uplink message in the two-step random access);
(5) a pilot (reference signal) on a PUCCH carrying the MSGA (uplink message in the two-step random access); or
(6) a pilot (reference signal) on a PUSCH carrying the MSGA (uplink message in the two-step random access).

The feature of the second access mode may include that, in the second access mode, the second access information and the second pilot (reference signal) associated with the second access information transmission are transmitted on the same time-frequency domain transmission resource(s). The transmission resource(s) of the second access information and the transmission resource(s) of the second pilot (reference signal) associated with the second access information transmission are completely or partially the same. For example, the second access information (for example, DCI and/or data of MSG3, MSGB) and the pilot (for example, a reference signal, e.g., a PREAMBLE, a DMRS signal) associated with the second access information transmission are simultaneously transmitted on the same time domain and frequency domain resource(s).

An example of the configuration of the second access mode is as follows: the protocol may predefine the second access mode, or the base station may indicate the second access mode to the UE. The protocol may predefine, or the base station may indicate a transmission scheme of the second pilot(s) (reference signal(s)) associated with the second access mode. The content predefined by the protocol or indicated by the base station may be a transmission scheme of the second access information and/or the second pilot(s) (reference signal(s)) associated with the second access information, or an identification corresponding to the above transmission scheme.

The base station may indicate the second access mode to the UE. As illustrated in FIG. 11, the base station may indicate the pilot transmission scheme associated with the second access information transmission by one or more of the following messages: (1) a broadcast message, such as MIB, SIB1, SIB, (2) an RRC message, (3) a DCI message, (4) a downlink message during random access procedure, such as MSG2, (5) a PDCCH, (6) a PDSCH, or (7) a downlink channel dedicated to AI/ML.

For example, in the broadcast SIB1 or SIB2, when configuring random access of the current cell, the base station indicates at least one of whether the second access mode is used, the type of the second access mode to be used, or the configuration situation of the second access mode to be used.

For example, in the broadcast SIB and/or the RRC message, when configuring random access of a neighbor cell, the base station indicates at least one of whether the second access mode is used, the type of the second access mode to be used, or the configuration situation of the second access mode to be used.

For example, in the MSG2, the base station indicates, for the MSG3, at least one of whether the second access information is transmitted by using the second access mode, the type of the second access mode to be used, or the configuration situation of the second access mode to be used.

The UE may indicate and/or request the second access mode to the base station. As illustrated in FIG. 12, the UE may indicate and/or request a pilot transmission scheme associated with the second access information transmission by one or more of the following messages: (1) UE capability reporting indicating that the UE supports the second access mode, (2) a RRC message, (3) a UCI message, (4) an uplink message during random access, such as MSG1 (for example, the transmission resource location(s) and/or a specific sequence of MSG1, the MSG1 may be used to indicate that the UE may use the second access mode, for example, one or more of MSG3, and MSGA is transmitted by using the second access model), (5) a PUCCH, (6) a PUSCH, or (7) an uplink channel dedicated to AI/ML.

For example, in the MSG1 (PREAMBLE message), the UE indicates at least one of whether the second access information is transmitted by using the second access mode for the MSG3 and/or the MSGA, the type of the second access mode to be used, or a configuration situation of the second access mode to be used.

In the at least one of the protocol predefining the second access mode, the base station configuring the second access mode to the UE, or the UE indicating the second access mode to the base station and/or the UE requesting the base station to configure the second access mode, the usage scope in which the second access mode is applicable to the second access information may be predefined or configured or requested. For example, the second access mode is applicable to one or more of the following scopes:
(1) a pilot transmitted for MSG1 (PREAMBLE message) is transmitted by using the second access mode;
(2) a pilot on the MSG3 (uplink message in RACH procedure) PUCCH is transmitted by using the second access mode;
(3) a pilot on the MSG3 (uplink message in RACH Process) PUSCH is transmitted by using the second access mode;
(4) a pilot transmitted for MSGA (uplink message in two-step random access) is transmitted by using the second access mode;
(5) a pilot on the PUCCH of the MSGA (uplink message in two-step random access) is transmitted by using the second access mode; or
(6) a pilot on the PUSCH of the MSGA (uplink message in two-step random access) is transmitted by using the second access mode.

In the at least one of the protocol predefining the second access mode, the base station configuring the second access mode to the UE, or the UE indicating the second access mode to the base station and/or requesting the base station to configure the second access mode, the specific configuration information of the second pilot(s) (reference signal(s)) associated with the second access information transmission in the second access mode may be predefined or configured or requested. For example, the configuration information of the second pilot(s) (reference signal(s)) may include one or more pieces of the following information:
(1) transmission resource(s) of the second pilot(s) (reference signal(s)) associated with the second access information transmission, for example, one or more symbols in the time domain transmission range of the first access information in the time domain, and/or one or more resource blocks or subcarriers in the frequency domain transmission range of the first access information in the frequency domain.
(2) transmission power(s) of the second pilot(s) (reference signal(s)) associated with the second access information transmission. For example, the second pilot(s) (reference signal(s)) transmission associated with the second access information transmission using the second access mode uses a fixed second pilot (reference signal) transmission power, or a fixed ratio or difference between the second pilot (reference signal) transmission power and the reference power. The reference power may be the total power of the second access information transmission and the second pilot transmission, the power of the second access information transmission, or a specific reference power (such as the transmission power of the SSB, the transmission power of the PBCH, the transmission power of the DMRS of the PBCH, the transmission power of the PREAMBLE, etc.). The power information revolved in the second power allocation scheme may indicate an absolute power magnitude or a relative power magnitude in db, dbm, or the like.
(3) sequence information of the second pilot(s) (reference signal(s)) associated with the second access information transmission, for example, gold sequence, ZC sequence, m sequence, all-1 sequence, or specific sequences that have been modulated by modulation methods such as QPSK, 16QAM, 64QAM. Another example is from different AI/ML pilot sequence training results .
(4) modulation information of the second pilot(s) (reference signal(s)) associated with the second access information transmission. For example, modulation methods such as QPSK, 16QAM, and 64QAM, or modulation information and/or processing methods in which modulation results such as QPSK, 16QAM, and 64QAM are subjected to processing such as offset, rotation, scaling, or the like.

### Embodiment 3:

The base station may transmit the first access information and the first pilot(s) (reference signal(s)) associated with the first access information transmission to the UE by using the first access mode. If the first access information is the MSG2 in the four-step random access, the first pilot (reference signal) associated with the first access information transmission may be the pilot (reference signal) that needs to be transmitted for the MSG2. Further, the first pilot (reference signal) associated with the first access information transmission may be a pilot (reference signal) on the PDCCH carrying the MSG2 or a pilot (reference signal) on the PDSCH carrying the MSG2.

Similarly, the first access information is MSG4 in four-step random access, MSG2 in non-contention two-step random access, or MSGB in two-step random access, and for the first pilot (reference signal) associated with the first access information transmission, the reference is made to the above-described relevant example of MSG 2, and the example will not be repeated here.

### Embodiment 4:

The UE transmits the second access information and the second pilot(s) (reference signal(s)) associated with the second access information transmission to the base station by using the second access mode. If the second access information is the MSGA in the two-step random access, the second pilot (reference signal) associated with the second access information transmission may be the pilot (reference signal) that needs to be transmitted for the MSGA in the two-step random access. Further, the second pilot (reference signal) associated with the second access information transmission may be a pilot (reference signal) on the PUCCH carrying the MSGA or a pilot (reference signal) on the PUSCH carrying the MSGA.

Similarly, if the second access information is MSG1 in four-step random access, MSG3 in four-step random access, or MSG1 in non-contention two-step random access, for the second pilot (reference signal) associated with the second access information transmission, the reference is made to the relevant example of the MSGA described above.

In the above-described first access mode for downlink, the network side needs to have a support capability (transmission capability) for the first access mode, and the UE side needs to have a support capability (reception capability) for the first access mode. If the network side fails to transmit or the UE side cannot receive (for example, it does not have the reception capability for the superimposed transmission manner, the AI reception model, etc.), the first access mode may not work. Therefore, for the first access mode, the method may further include that the network indicates that the first access mode is supported and/or the UE indicates that the first access mode is supported before configuring and/or indicating that the first access mode is used.

In the above-described second access mode for uplink, the network side needs to have a support capability (reception capability) for the second access mode, and the UE side needs to have a support capability (transmission capability) for the second access mode. If the UE side fails to transmit or the network side fails to receive (e.g., it does not have the reception capability for the superimposed transmission manner, the AI reception model, etc.), the second access mode may not work. Therefore, for the second access mode, the method may further include that the network indicates that the second access mode is supported and/or the UE indicates that the second access mode is supported before configuring and/or indicating that the second access mode is used.

The predefinition in the protocol, the configuration of the network, the indication of UE, and the like of the first access mode and the second access mode may be an independent predefinition, configuration, and indication distinguished between the first and second access mode (distinguished between uplink and downlink, and signaling), or may be a unified predefinition, configuration, and indication that is not distinguished between the first and second access mode (is not distinguished between uplink and downlink, and signaling). For example, the content of the indication is to simultaneously predefine, configure, and indicate an access scheme for superimposed transmission of data and pilot (reference signal) in the embodiments of the present disclosure.

The communication method according to the embodiments of the present disclosure includes a scheme in which data and pilot (reference signal) are transmitted in a superimposed manner in a non-orthogonal form in the random access process, and is a method in which pilot and data transmission are transmitted in a superimposed manner in the random access procedure. After using the methods of the present embodiments, in the initial transmission process, the pilot(s) occupying independent initial access resource(s) can be avoided, and considering that the transmission resources are very limited, the occupation of radio resources by data transmission in the random access procedure can be minimized.

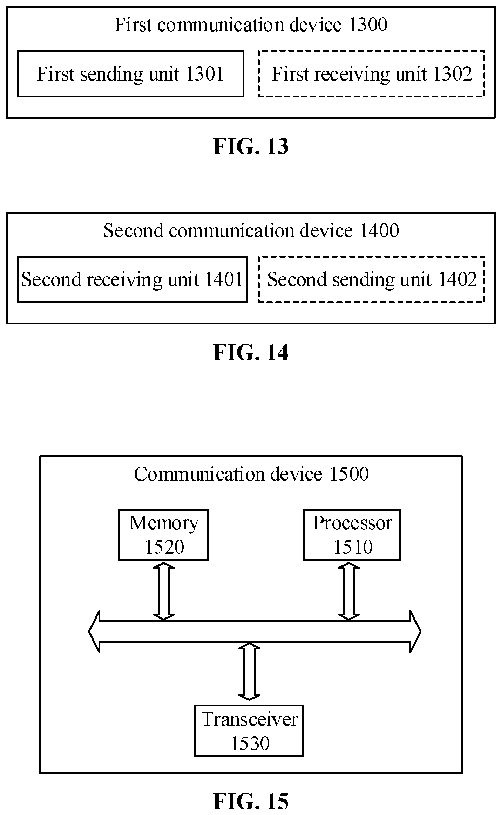

FIG. 13 is a schematic block diagram of the first communication device 1300 according to an embodiment of the present disclosure. The first communication device 1300 may include the first transmission unit 1301.

The first transmission unit 1301 is configured to send, by using an access mode, access information and reference signal(s) associated with the access information.

In one embodiment, the access information is information in random access.

In one embodiment, the first communication device is a network device, the access mode is the first access mode, the access information is the first access information, and the reference signal(s) is first reference signal(s).

In one embodiment, the first access information includes at least one of: a RAR message in four-step random access; a contention resolution message in the four-step random access; a RAR message in non-contention two-step random access; or a downlink message in two-step random access.

In one embodiment, the first reference signal(s) includes at least one of: a reference signal that needs to be transmitted for the RAR message; a reference signal on a PDCCH carrying the RAR message; a reference signal on a PDSCH carrying the RAR message; a reference signal that needs to be transmitted for the contention resolution message; a reference signal on a PDCCH carrying the contention resolution message; a reference signal on a PDSCH carrying the contention resolution message; a reference signal that needs to be transmitted for the downlink message in the two-step random access; a reference signal on a PDCCH carrying the downlink message in the two-step random access; a reference signal on a PDSCH carrying downlink message in the two-step random access.

In one embodiment, in the first access mode, the first access information and the first reference signal are transmitted on same time-frequency domain transmission resource(s).

In one embodiment, transmission resource(s) of the first access information and transmission resource(s) of the first reference signal are completely or partially the same.

In one embodiment, at least one of the first access mode, a transmission scheme of the first access information, a transmission scheme of the first reference signal, a use range in which the first access mode is applicable to the first access information, configuration information of the first reference signal, and whether the first access mode is supported is predefined.

In one embodiment, the first transmission unit 1301 is further configured to send the first information. The first information is used for indicating at least one of the first access mode, a transmission scheme of the first access information, a transmission scheme of the first reference signal, a usage scope in which the first access mode is applicable to the first access information, configuration information of the first reference signal, or whether the first access mode is supported.

In one embodiment, the first information is carried by at least one of a broadcast message, an RRC message, a DCI message, a downlink message in random access, a PDCCH, a PDSCH, a downlink channel dedicated to AI/ML.

In one embodiment, the first communication device further includes the first receiving unit 1302.

The first receiving unit 1302 is configured to receive the second information. The second information is used for indicating or requesting configuration of at least one of the first access mode, a transmission scheme of the first access information, a transmission scheme of the first reference signal, a usage scope in which the first access mode is applicable to the first access information, configuration information of the first reference signal, or whether the first access mode is supported.

In one embodiment, the second information is carried by at least one of device capability reporting information, an RRC message, a UCI message, an uplink message in random access, a PUCCH, a PUSCH, or an uplink channel dedicated to AI/ML.

In one embodiment, the usage scope in which the first access mode is applicable to the first access information includes at least one of: the first reference signal transmitted by the RAR message is transmitted by using the first access mode; the first reference signal on the PDCCH of the RAR message is transmitted by using the first access mode; the first reference signal on the PDSCH of the RAR message is transmitted by using the first access mode; the first reference signal transmitted for the contention resolution message is transmitted by using the first access mode; the first reference signal on the PDCCH of the contention resolution message is transmitted by using the first access mode; the first reference signal on the PDSCH of the contention resolution message is transmitted by using the first access mode; the first reference signal transmitted for the downlink message in the two-step random access is transmitted by using the first access mode; the first reference signal on the PDCCH of the downlink message in the two-step random access is transmitted by using the first access mode; or the first reference signal on the PDSCH of the downlink message in the two-step random access is transmitted by using the first access mode.

In one embodiment, the configuration information of the first reference signal(s) includes at least one of: transmission resource(s) of the first reference signal(s); transmission power(s) of the first reference signal(s); sequence information of the first reference signal(s); or modulation information of the first reference signal(s).

In one embodiment, the first communication device is a terminal device, the access mode is the second access mode, the access information is the second access information, and the reference signal(s) is second reference signal(s).

In one embodiment, the second access information includes at least one of: a preamble message in a four-step random access; an uplink message in the four-step random access; a preamble message in a non-contention two-step random access; or an uplink message in two-step random access.

In one embodiment, the second reference signal includes at least one of: a reference signal that needs to be transmitted for the preamble message; a reference signal on a PDCCH carrying the uplink message in the four-step random access; a reference signal on a PDSCH carrying the uplink message in the four-step random access; a reference signal that needs to be transmitted for the uplink message in the two-step random access; a reference signal on a PDCCH carrying the uplink message in the two-step random access; or a reference signal on a PDSCH carrying the uplink message in the two-step random access.

In one embodiment, in the second access mode, the second access information and the second reference signal are transmitted on same time-frequency domain transmission resource(s).

In one embodiment, transmission resource(s) of the second access information and transmission resource(s) of the second reference signal are completely or partially the same.

In one embodiment, at least one of the second access mode, a transmission scheme of the second access information, a transmission scheme of the second reference signal, a usage scope in which the second access mode is applicable to the second access information, configuration information of the second reference signal, or whether the second access mode is supported is predefined.

In one embodiment, the first receiving unit 1302 is further configured to receive the third information. The third information is used for indicating at least one of the second access mode, a transmission scheme of the second access information, a transmission scheme of the second reference signal(s), a usage scope in which the second access mode is applicable to the second access information, configuration information of the second reference signal(s), or whether the second access mode is supported.

In one embodiment, the third information is carried by at least one of a broadcast message, an RRC message, a DCI message, a downlink message in random access, a PDCCH, a PDSCH, a downlink channel dedicated to AI/ML.

In one embodiment, the first transmission unit 1301 is further configured to send the fourth information. The fourth information is used for indicating or requesting configuration of at least one of the second access mode, a transmission scheme of the second access information, a transmission scheme of the second reference signal(s), a usage scope in which the second access mode is applicable to the second access information, configuration information of the second reference signal(s), or whether the second access mode is supported.

In one embodiment, the fourth information is carried by at least one of device capability reporting information, an RRC message, a UCI message, an uplink message in random access, a PUCCH, a PUSCH, or an uplink channel dedicated to AI/ML.

In one embodiment, the usage scope in which the second access mode is applicable to the second access information includes at least one of: the second reference signal transmitted for the preamble message is transmitted by using the second access mode; the second reference signal on the PDCCH of the uplink message in the four-step random access is transmitted by using the second access mode; the second reference signal on the PDSCH of the uplink message in the four-step random access is transmitted by using the second access mode; the second reference signal transmitted for the uplink message in the two-step random access is transmitted by using the second access mode; the second reference signal on the PDCCH of the uplink message in the two-step random access is transmitted by using the second access mode; or the second reference signal on the PDSCH of the uplink message in the two-step random access is transmitted by using the second access mode.

In one embodiment, the configuration information of the second reference signal(s) includes at least one of: transmission resource(s) of the second reference signal(s); transmission power(s) of the second reference signal(s); sequence information of the second reference signal(s); or modulation information of the second reference signal(s).

The first communication device 1300 according to the embodiment of the present disclosure can realize the corresponding functions of the first communication device in the method embodiments described above. For the corresponding flow, function, implementation mode and beneficial effect of each module (sub-module, unit or component, etc.) in the first communication device 1300, the reference is made to the corresponding description in the above method embodiments, and will not be described again here. It should be noted that the functions described for each module (sub-module, unit, component, or the like) in the first communication device 1300 of the embodiments of the present disclosure may be realized by different modules (sub-module, unit, component, or the like), or may be realized by the same module (sub-module, unit, component, or the like).

FIG. 14 is a schematic block diagram of the second communication device 1400 according to an embodiment of the present disclosure. The second communication device 1400 may include the second receiving unit 1401.

The second receiving unit 1401 is configured to receive, by using an access mode, access information and reference signal(s) associated with the access information in.

In one embodiment, the access information is information in random access.

In one embodiment, the second communication device is a terminal device, the access mode is the first access mode, the access information is the first access information, and the reference signal(s) is first reference signal(s).

In one embodiment, the first access information includes at least one of: a RAR message in four-step random access; a contention resolution message in the four-step random access; a RAR message in non-contention two-step random access; or a downlink message in two-step random access.

In one embodiment, the first reference signal(s) includes at least one of: a reference signal that needs to be transmitted for the RAR message; a reference signal on a PDCCH carrying the RAR message; a reference signal on a PDSCH carrying the RAR message; a reference signal that needs to be transmitted for the contention resolution message; a reference signal on a PDCCH carrying the contention resolution message; a reference signal on a PDSCH carrying the contention resolution message; a reference signal that needs to be transmitted for the downlink message in the two-step random access; a reference signal on a PDCCH carrying the downlink message in the two-step random access; or a reference signal on a PDSCH carrying the downlink message in the two-step random access.

In one embodiment, in the first access mode, the first access information and the first reference signal are transmitted on same time-frequency domain transmission resource(s).

In one embodiment, transmission resource(s) of the first access information and transmission resource(s) of the first reference signal are completely or partially the same.

In one embodiment, at least one of the first access mode, a transmission scheme of the first access information, a transmission scheme of the first reference signal, a usage scope in which the first access mode is applicable to the first access information, configuration information of the first reference signal, or whether the first access mode is supported is predefined.

In one embodiment, the second receiving unit is further configured to receive the first information. The first information is used for indicating at least one of the first access mode, a transmission scheme of the first access information, a transmission scheme of the first reference signal, a usage scope in which the first access mode is applicable to the first access information, configuration information of the first reference signal, or whether the first access mode is supported.

In one embodiment, the first information is carried by at least one of a broadcast message, an RRC message, a DCI message, a downlink message in random access, a PDCCH, a PDSCH, or a downlink channel dedicated to AI/ML.

In one embodiment, the second communication device further includes the second transmission unit 1402.

The second transmission unit 1402 is configured to send the second information. The second information is used for indicating or requesting configuration of at least one of the first access mode, a transmission scheme of the first access information, a transmission scheme of the first reference signal, a usage scope in which the first access mode is applicable to the first access information, configuration information of the first reference signal, or whether the first access mode is supported.

In one embodiment, the second information is carried by at least one of device capability reporting information, an RRC message, a UCI message, an uplink message in random access, a PUCCH, a PUSCH, or an uplink channel dedicated to AI/ML.

In one embodiment, the usage scope in which the first access mode is applicable to the first access information includes at least one of: the first reference signal transmitted for the RAR message is transmitted by using the first access mode; the first reference signal on the PDCCH of the RAR message is transmitted by using the first access mode; the first reference signal on the PDSCH of the RAR message is transmitted by using the first access mode; the first reference signal transmitted for the contention resolution message is transmitted by using the first access mode; the first reference signal on the PDCCH of the contention resolution message is transmitted by using the first access mode; the first reference signal on the PDSCH of the contention resolution message is transmitted by using the first access mode; the first reference signal transmitted for the downlink message in the two-step random access is transmitted by using the first access mode; the first reference signal on the PDCCH of the downlink message in the two-step random access is transmitted by using the first access mode; or the first reference signal on the PDSCH of the downlink message in the two-step random access is transmitted by using the first access mode.

In one embodiment, the configuration information of the first reference signal(s) includes at least one of: transmission resource(s) of the first reference signal(s); transmission power(s) of the first reference signal(s); sequence information of the first reference signal(s); or modulation information of the first reference signal(s).

In one embodiment, the second communication device is a network device, the access mode is the second access mode, the access information is the second access information, and the reference signal(s) is second reference signal(s).

In one embodiment, the second access information includes at least one of: a preamble message in a four-step random access; an uplink message in the four-step random access; a preamble message in a non-contention two-step random access; or an uplink message in two-step random access.

In one embodiment, the second reference signal(s) includes at least one of: a reference signal that needs to be transmitted for the preamble message; a reference signal on a PDCCH carrying the uplink message in the four-step random access; a reference signal on a PDSCH carrying the uplink message in the four-step random access; a reference signal that needs to be transmitted for the uplink message in the two-step random access; a reference signal on a PDCCH carrying the uplink message in the two-step random access; or a reference signal on a PDSCH carrying the uplink message in the two-step random access.

In one embodiment, in the second access mode, the second access information and the second reference signal are transmitted on same time-frequency domain transmission resource(s).

In one embodiment, transmission resource(s) of the second access information and transmission resource(s) of the second reference signal are completely or partially the same.

In one embodiment, at least one of the second access mode, the transmission scheme of the second access information, a transmission scheme of the second reference signal, a usage scope in which the second access mode is applicable to the second access information, configuration information of the second reference signal, or whether the second access mode is supported is predefined.

In one embodiment, the second transmission unit 1402 is further configured to send the third information. The third information is used for indicating at least one of the second access mode, a transmission scheme of the second access information, a transmission scheme of the second reference signal, a usage scope in which the second access mode is applicable to the second access information, configuration information of the second reference signal, or whether the second access mode is supported.

In one embodiment, the third information is carried by at least one of a broadcast message, an RRC message, a DCI message, a downlink message in random access, a PDCCH, a PDSCH, or a downlink channel dedicated to AI/ML.

In one embodiment, the second receiving unit 1401 is further configured to receive the fourth information. The fourth information is used for instructing or requesting configuration of at least one of the second access mode, a transmission scheme of the second access information, a transmission scheme of the second reference signal, a usage scope in which the second access mode is applicable to the second access information, configuration information of the second reference signal, or whether the second access mode is supported.

In one embodiment, the fourth information is carried by at least one of device capability reporting information, an RRC message, a UCI message, an uplink message in random access, a PUCCH, a PUSCH, or an uplink channel dedicated to AI/ML.

In one embodiment, the usage scope in which the second access mode is applicable to the second access information includes at least one of: the second reference signal transmitted for the preamble message is transmitted by using the second access mode; the second reference signal on the PDCCH of the uplink message in the four-step random access is transmitted by using the second access mode; the second reference signal on the PDSCH of the uplink message in the four-step random access is transmitted by using the second access mode; the second reference signal transmitted by the uplink message in the two-step random access is transmitted by using the second access mode; the second reference signal on the PDCCH of the uplink message in the two-step random access is transmitted by using the second access mode; or the second reference signal on the PDSCH of the uplink message in the two-step random access is transmitted by using the second access mode.

In one embodiment, the configuration information of the second reference signal(s) includes at least one of: transmission resource(s) of the second reference signal(s); transmission power(s) of the second reference signal(s); sequence information of the second reference signal(s); or modulation information of the second reference signal(s).

The second communication device 1400 according to the embodiment of the present disclosure can realize the corresponding functions of the second communication device in the method embodiments described above. For the corresponding flow, function, implementation mode and beneficial effect of each module (sub-module, unit, component, etc.) in the second communication device 1400, the reference is made to the corresponding description in the above method embodiments, and will not be described again here. It should be noted that the functions described for each module (sub-module, unit, component, or the like) in the second communication device 1400 of the embodiments of the present disclosure may be realized by different modules (sub-module, unit, component, or the like), or may be realized by the same module (sub-module, unit, component, or the like).

FIG. 15 is a schematic structural diagram of a communication device 1500 according to an embodiment of the present disclosure. The communication device 1500 includes a processor 1510. The processor is configured to invoke and execute a computer program from a memory to cause the communication device 1500 to implement the methods in the embodiments of the present disclosure.

In one embodiment, the communication device 1500 may further include a memory 1520. Here, the processor 1510 may invoke and execute a computer program from the memory 1520 to cause the communication device 1500 to implement the methods in the embodiments of the present disclosure.

The memory 1520 may be a separate device independent of the processor 1510, or may be integrated in the processor 1510.

In one embodiment, the communication device 1500 may further include a transceiver 1530, and the processor 1510 may control the transceiver 1530 to communicate with other devices, specifically, may transmit information or data to or receive information or data sent by other devices.

The transceiver 1530 may include a transmitter and a receiver. The transceiver 1530 may further include one or more antennas.

In one embodiment, the communication device 1500 may be the first communication device according to the embodiments of the present disclosure, and the communication device 1500 may implement corresponding processes implemented by the first communication device in various methods of the embodiments of the present disclosure, which will not be described again here for simplicity.

In one embodiment, the communication device 1500 may be the second communication device according to the embodiments of the present disclosure, and the communication device 1500 may implement corresponding processes implemented by the second communication device in various methods of the embodiments of the present disclosure, which will not be described again here for simplicity.

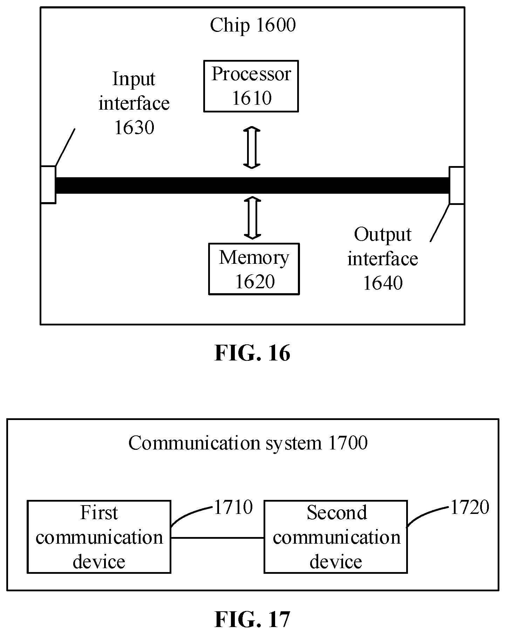

FIG. 16 is a schematic structural diagram of a chip 1600 according to an embodiment of the present disclosure. The chip 1600 includes a processor 1610. The processor is configured to invoke and execute a computer program from a memory to implement the methods in the embodiments of the present disclosure.

In one embodiment, the chip 1600 may further include a memory 1620. Here, the processor 1610 may invoke and execute a computer program from the memory 1620 to implement the method performed by the first communication device or the second communication device in the embodiments of the present disclosure.

The memory 1620 may be a separate device independent of the processor 1610, or may be integrated in the processor 1610.

In one embodiment, the chip 1600 may further include an input interface 1630. Here, the processor 1610 may control the input interface 1630 to communicate with other devices or chips, and specifically, may acquire information or data sent by other devices or chips.

In one embodiment, the chip 1600 may further include an output interface 1640. The processor 1610 may control the output interface 1640 to communicate with other devices or chips, and specifically, may output information or data to other devices or chips.

In one embodiment, the chip may be applied to the first communication device in the embodiments of the present disclosure, and the chip may realize the corresponding flow implemented by the first communication device in various methods of the embodiments of the present disclosure, which will not be described again here for simplicity.

In one embodiment, the chip may be applied to the second communication device in the embodiments of the present disclosure, and the chip may realize the corresponding flow implemented by the second communication device in various methods of the embodiments of the present disclosure, which will not be described again here for simplicity.

The chips applied to the first communication device and the second communication device may be the same chip or different chips.

It should be understood that the chip mentioned in the embodiment of the present disclosure may also be referred to as a system-level chip, a system chip, a chip system, a system-on-chip chip, or the like.

The processors mentioned above may be general-purpose processors, digital signal processors (DSP), field programmable gate arrays (FPGAs), application specific integrated circuits (ASICs) or other programmable logic devices, transistor logic devices, discrete hardware components, and the like. Here, the general-purpose processor mentioned above may be a microprocessor, any conventional processor, or the like.

The memory mentioned above may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EPROM), or a flash memory. The volatile memory may be a random access memory (RAM).

It should be understood that the above-described memory is exemplary but not limiting, and for example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), and the like. That is, the memory in embodiments of the present disclosure is intended to include, but is not limited to, these and any other suitable types of memory.

FIG. 17 is a schematic block diagram of a communication system 1700 according to an embodiment of the present disclosure. The communication system 1700 includes the first communication device 1710 and the second communication device 1720. The first communication device 1710 is configured to send access information and reference signal(s) associated with the access information by using an access mode. The second communication device 1720 is configured to receive access information and reference signal(s) associated with the access information by using an access mode. The first communication device 1710 may be used to implement the corresponding functions implemented by the first communication device in the above-described methods, and the second communication device 1720 may be used to implement the corresponding functions implemented by the second communication device in the above-described methods. For the sake of brevity, details will not be described here.

In the above-described embodiments, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, flows or functions according to the embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center to another website site, computer, server, or data center via wired (e.g., coaxial cable, fiber optic, Digital Subscriber Line (DSL)) or wireless (e.g., infrared, wireless, microwave, etc.). The computer-readable storage medium may be any available medium accessible by a computer or a data storage device such as a server, data center, or the like incorporating one or more of the available media integrations. The available medium may be a magnetic medium (e.g., a floppy Disk, a hard Disk, a magnetic tape), an optical medium (e.g., a DVD), or a semiconductor medium (e.g., a Solid State Disk (SSD)), or the like.

It should be understood that in various embodiments of the present disclosure, the size of the sequence numbers of the above-described processes does not mean the order of execution order, and the execution order of each process should be determined by its function and inherent logic, and should not constitute any limitation on the implementation process of the embodiments of the present disclosure.

Those skilled in the art can clearly understand that for convenience and simplicity of the description, the specific working processes of the above-described systems, devices, and units can be referred to the corresponding processes in the above-described method embodiments, and will not be described again here.

The above are only specific embodiments of the present disclosure, but the protection scope of the present disclosure is not limited thereto, and any person familiar with the technical field can easily think of changes or substitutions within the technical scope disclosed in the present disclosure, and all of them should be covered by the protection scope of the present disclosure. Therefore, the scope of protection of the present disclosure should be determined by the scope of protection of the claim.

## Claims

1. A communication method, comprising:
sending, by a first communication device by using an access mode, access information and reference signal(s) associated with the access information.

2. The method of claim 1, wherein the access information is information in random access.

3. The method of claim 1 or 2, wherein the first communication device is a network device, the access mode is a first access mode, the access information is first access information, and the reference signal(s) is first reference signal(s).

4. The method of claim 3, wherein the first access information comprises at least one of:
a Random Access Response (RAR) message in four-step random access;
a contention resolution message in the four-step random access;
a RAR message in non-contention two-step random access; or
a downlink message in two-step random access.

5. The method of claim 4, wherein the first reference signal(s) comprises at least one of:
a reference signal that needs to be transmitted for the RAR message;
a reference signal on a Physical Downlink Control Channel (PDCCH) carrying the RAR message;
a reference signal on a Physical Downlink Shared Channel (PDSCH) carrying the RAR message;
a reference signal that needs to be transmitted for the contention resolution message;
a reference signal on a PDCCH carrying the contention resolution message;
a reference signal on a PDSCH carrying the contention resolution message;
a reference signal that needs to be transmitted for the downlink message in the two-step random access;
a reference signal on a PDCCH carrying the downlink message in the two-step random access; or
a reference signal on a PDSCH carrying the downlink message in the two-step random access.

6. The method of any one of claims 3 to 5, wherein in the first access mode, the first access information and the first reference signal are transmitted on same time-frequency domain transmission resource(s).

7. The method of claim 6, wherein transmission resource(s) of the first access information and transmission resource(s) of the first reference signal are completely or partially the same.

8. The method of any one of claims 3 to 7, wherein at least one of the first access mode, a transmission scheme of the first access information, a transmission scheme of the first reference signal, a usage scope in which the first access mode is applicable to the first access information, configuration information of the first reference signal, or whether the first access mode is supported is predefined.

9. The method of any one of claims 3 to 8, further comprising:
sending, by the first communication device, first information, wherein the first information is used for indicating at least one of the first access mode, a transmission scheme of the first access information, a transmission scheme of the first reference signal, a usage scope in which the first access mode is applicable to the first access information, configuration information of the first reference signal, or whether the first access mode is supported.

10. The method of claim 9, wherein the first information is carried by at least one of a broadcast message, a Radio Resource Control (RRC) message, a Downlink control information (DCI) message, a downlink message in random access, a PDCCH, a PDSCH, or a downlink channel dedicated to Artificial Intelligence/Machine Learning (AI/ML).

11. The method of any one of claims 3 to 10, further comprising:
receiving, by the first communication device, second information, wherein the second information is used for indicating or requesting configuration of at least one of the first access mode, a transmission scheme of the first access information, a transmission scheme of the first reference signal, a usage scope in which the first access mode is applicable to the first access information, configuration information of the first reference signal, or whether the first access mode is supported.

12. The method of claim 11, wherein the second information is carried by at least one of device capability reporting information, an RRC message, a Uplink control information (UCI) message, an uplink message in random access, a PUCCH, a PUSCH, or an uplink channel dedicated to AI/ML.

13. The method of any one of claims 8 to 12, wherein the usage scope in which the first access mode is applicable to the first access information comprises at least one of:
the first reference signal transmitted for the RAR message is transmitted by using the first access mode;
the first reference signal on the PDCCH of the RAR message is transmitted by using the first access mode;
the first reference signal on the PDSCH of the RAR message is transmitted by using the first access mode;
the first reference signal transmitted for the contention resolution message is transmitted by using the first access mode;
the first reference signal on the PDCCH of the contention resolution message is transmitted by using the first access mode;
the first reference signal on the PDSCH of the contention resolution message is transmitted by using the first access mode;
the first reference signal transmitted for the downlink message in the two-step random access is transmitted by using the first access mode;
the first reference signal on the PDCCH of the downlink message in the two-step random access is transmitted by using the first access mode; or
the first reference signal on the PDSCH of the downlink message in the two-step random access is transmitted by using the first access mode.

14. The method of any one of claims 8 to 13, wherein the configuration information of the first reference signal(s) comprises at least one of: transmission resource(s) of the first reference signal(s); transmission power(s) of the first reference signal(s); sequence information of the first reference signal(s); or modulation information of the first reference signal(s).

15. The method of any one of claims 1 to 14, wherein the first communication device is a terminal device, the access mode is a second access mode, the access information is second access information, and the reference signal(s) is second reference signal(s).

16. The method of claim 15, wherein the second access information comprises at least one of:
a preamble message in a four-step random access;
an uplink message in the four-step random access;
a preamble message in a non-contention two-step random access; or
an uplink message in two-step random access.

17. The method of claim 16, wherein the second reference signal(s) comprises at least one of:
a reference signal that needs to be transmitted for the preamble message;
a reference signal on a PDCCH carrying the uplink message in the four-step random access;
a reference signal on a PDSCH carrying the uplink message in the four-step random access;
a reference signal that needs to be transmitted for the uplink message in the two-step random access;
a reference signal on a PDCCH carrying the uplink message in the two-step random access; or
a reference signal on a PDSCH carrying the uplink message in the two-step random access.

18. The method of claim 16 or 17, wherein in the second access mode, the second access information and the second reference signal are transmitted on same time-frequency domain transmission resource(s).

19. The method of claim 18, wherein transmission resource(s) of the second access information and transmission resource(s) of the second reference signal are completely or partially the same.

20. The method of any one of claims 15 to 19, wherein at least one of the second access mode, a transmission scheme of the second access information, a transmission scheme of the second reference signal(s), a usage scope in which the second access mode is applicable to the second access information, configuration information of the second reference signal(s), or whether the second access mode is supported is predefined.

21. The method of any one of claims 15 to 20, further comprising:
receiving, by the first communication device, third information, wherein the third information is used for indicating at least one of the second access mode, a transmission scheme of the second access information, a transmission scheme of the second reference signal(s), a usage scope in which the second access mode is applicable to the second access information, configuration information of the second reference signal(s), or whether the second access mode is supported.

22. The method of claim 21, wherein the third information is carried by at least one of a broadcast message, an RRC message, a DCI message, a downlink message in random access, a PDCCH, a PDSCH, or a downlink channel dedicated to AI/ML.

23. The method of any one of claims 15 to 22, further comprising:
sending, by the first communication device, fourth information, wherein the fourth information is used for indicating or requesting configuration of at least one of the second access mode, a transmission scheme of the second access information, a transmission scheme of the second reference signal(s), a usage scope in which the second access mode is applicable to the second access information, configuration information of the second reference signal(s), or whether the second access mode is supported.

24. The method of claim 23, wherein the fourth information is carried by at least one of device capability reporting information, an RRC message, a UCI message, an uplink message in random access, a PUCCH, a PUSCH, or an uplink channel dedicated to AI/ML.

25. The method of any one of claims 20 to 24, wherein the usage scope in which the second access mode is applicable to the second access information comprises at least one of:
the second reference signal transmitted for the preamble message is transmitted by using the second access mode;
the second reference signal on the PDCCH of the uplink message in the four-step random access is transmitted by using the second access mode;
the second reference signal on the PDSCH of the uplink message in the four-step random access is transmitted by using the second access mode;
the second reference signal transmitted for the uplink message in the two-step random access is transmitted by using the second access mode;
the second reference signal on the PDCCH of the uplink message in the two-step random access is transmitted by using the second access mode; or
the second reference signal on the PDSCH of the uplink message in the two-step random access is transmitted by using the second access mode.

26. The method of any one of claims 20 to 25, wherein the configuration information of the second reference signal(s) comprises at least one of: transmission resource(s) of the second reference signal(s); transmission power(s) of the second reference signal(s); sequence information of the second reference signal(s); or modulation information of the second reference signal(s).

27. A communication method, comprising:
receiving, by a second communication device by using an access mode, access information and reference signal(s) associated with the access information.

28. The method of claim 27, wherein the access information is information in random access.

29. The method of claim 27 or 28, wherein the second communication device is a terminal device, the access mode is a first access mode, the access information is first access information, and the reference signal(s) is first reference signal(s).

30. The method of claim 29, wherein the first access information comprises at least one of:
a Random Access Response (RAR) message in four-step random access;
a contention resolution message in the four-step random access;
a RAR message in non-contention two-step random access; or
a downlink message in two-step random access.

31. The method of claim 30, wherein the first reference signal(s) comprises at least one of:
a reference signal that needs to be transmitted for the RAR message;
a reference signal on a Physical Downlink Control Channel (PDCCH) carrying the RAR message;
a reference signal on a Physical Downlink Shared Channel (PDSCH) carrying the RAR message;
a reference signal that needs to be transmitted for the contention resolution message;
a reference signal on a PDCCH carrying the contention resolution message;
a reference signal on a PDSCH carrying the contention resolution message;
a reference signal that needs to be transmitted for the downlink message in the two-step random access;
a reference signal on a PDCCH carrying the downlink message in the two-step random access; or
a reference signal on a PDSCH carrying the downlink message in the two-step random access.

32. The method of any one of claims 29 to 31, wherein in the first access mode, the first access information and the first reference signal are transmitted on same time-frequency domain transmission resource(s).

33. The method of claim 32, wherein transmission resource(s) of the first access information and transmission resource(s) of the first reference signal are completely or partially the same.

34. The method of any one of claims 29 to 33, wherein at least one of the first access mode, a transmission scheme of the first access information, a transmission scheme of the first reference signal, a usage scope in which the first access mode is applicable to the first access information, configuration information of the first reference signal, or whether the first access mode is supported is predefined.

35. The method of any one of claims 29 to 34, further comprising:
receiving, by the second communication device, first information, wherein the first information is used for indicating at least one of the first access mode, transmission scheme(s) of the first access information, a transmission scheme of the first reference signal, a usage scope in which the first access mode is applicable to the first access information, configuration information of the first reference signal, or whether the first access mode is supported.

36. The method of claim 35, wherein the first information is carried by at least one of a broadcast message, a Radio Resource Control (RRC) message, a Downlink control information (DCI) message, a downlink message in random access, a PDCCH, a PDSCH, or a downlink channel dedicated to Artificial Intelligence/Machine Learning (AI/ML).

37. The method of any one of claims 29 to 36, further comprising:
sending, by the second communication device, second information, wherein the second information is used for indicating or requesting configuration of at least one of the first access mode, a transmission scheme of the first access information, a transmission scheme of the first reference signal, a usage scope in which the first access mode is applicable to the first access information, configuration information of the first reference signal, or whether the first access mode is supported.

38. The method of claim 37, wherein the second information is carried by at least one of device capability reporting information, an RRC message, a Uplink control information (UCI) message, an uplink message in random access, a PUCCH, a PUSCH, or an uplink channel dedicated to AI/ML.

39. The method of any one of claims 34 to 38, wherein the usage scope in which the first access mode is applicable to the first access information comprises at least one of:
the first reference signal transmitted for the RAR message is transmitted by using the first access mode;
the first reference signal on the PDCCH of the RAR message is transmitted by using the first access mode;
the first reference signal on the PDSCH of the RAR message is transmitted by using the first access mode;
the first reference signal transmitted for the contention resolution message is transmitted by using the first access mode;
the first reference signal on the PDCCH of the contention resolution message is transmitted by using the first access mode;
the first reference signal on the PDSCH of the contention resolution message is transmitted by using the first access mode;
the first reference signal transmitted for the downlink message in the two-step random access is transmitted by using the first access mode;
the first reference signal on the PDCCH of the downlink message in the two-step random access is transmitted by using the first access mode; or
the first reference signal on the PDSCH of the downlink message in the two-step random access is transmitted by using the first access mode.

40. The method of any one of claims 34 to 39, wherein the configuration information of the first reference signal(s) comprises at least one of: transmission resource(s) of the first reference signal(s); transmission power(s) of the first reference signal(s); sequence information of the first reference signal(s); or modulation information of the first reference signal(s).

41. The method of any one of claims 27 to 40, wherein the second communication device is a network device, the access mode is a second access mode, the access information is second access information, and the reference signal(s) is second reference signal(s).

42. The method of claim 41, wherein the second access information comprises at least one of:
a preamble message in a four-step random access;
an uplink message in the four-step random access;
a preamble message in a non-contention two-step random access; or
an uplink message in two-step random access.

43. The method of claim 42, wherein the second reference signal(s) comprises at least one of:
a reference signal that needs to be transmitted for the preamble message;
a reference signal on a PDCCH carrying the uplink message in the four-step random access;
a reference signal on a PDSCH carrying the uplink message in the four-step random access;
a reference signal that needs to be transmitted for the uplink message in the two-step random access;
a reference signal on a PDCCH carrying the uplink message in the two-step random access; or
a reference signal on a PDSCH carrying the uplink message in the two-step random access.

44. The method of claim 42 or 43, wherein in the second access mode, the second access information and the second reference signal are transmitted on same time-frequency domain transmission resource(s).

45. The method of claim 44, wherein transmission resource(s) of the second access information and transmission resource(s) of the second reference signal are completely or partially the same.

46. The method of any one of claims 41 to 45, wherein at least one of the second access mode, transmission scheme of the second access information, a transmission scheme of the second reference signal, a usage scope in which the second access mode is applicable to the second access information, configuration information of the second reference signal, or whether the second access mode is supported is predefined.

47. The method of any one of claims 41 to 46, further comprising:
sending, by the second communication device, third information, wherein the third information is used for indicating at least one of the second access mode, a transmission scheme of the second access information, a transmission scheme of the second reference signal(s), a usage scope in which the second access mode is applicable to the second access information, configuration information of the second reference signal(s), or whether the second access mode is supported.

48. The method of claim 47, wherein the third information is carried by at least one of a broadcast message, an RRC message, a DCI message, a downlink message in random access, a PDCCH, a PDSCH, or a downlink channel dedicated to AI/ML.

49. The method of any one of claims 41 to 48, further comprising:
receiving, by the second communication device, fourth information, wherein the fourth information is used for indicating or requesting configuration of at least one of the second access mode, a transmission scheme of the second access information, a transmission scheme of the second reference signal(s), a usage scope in which the second access mode is applicable to the second access information, configuration information of the second reference signal(s), or whether the second access mode is supported.

50. The method of claim 49, wherein the fourth information is carried by at least one of device capability reporting information, an RRC message, a UCI message, an uplink message in random access, a PUCCH, a PUSCH, or an uplink channel dedicated to AI/ML.

51. The method of any one of claims 46 to 50, wherein the usage scope in which the second access mode is applicable to the second access information comprises at least one of:
the second reference signal transmitted for the preamble message is transmitted by using the second access mode;
the second reference signal on the PDCCH of the uplink message in the four-step random access is transmitted by using the second access mode;
the second reference signal on the PDSCH of the uplink message in the four-step random access is transmitted by using the second access mode;
the second reference signal transmitted for the uplink message in the two-step random access is transmitted by using the second access mode;
the second reference signal on the PDCCH of the uplink message in the two-step random access is transmitted by using the second access mode; or
the second reference signal on the PDSCH of the uplink message in the two-step random access is transmitted by using the second access mode.

52. The method of any one of claims 46 to 51, wherein the configuration information of the second reference signal(s) comprises at least one of: transmission resource(s) of the second reference signal(s); transmission power(s) of the second reference signal(s); sequence information of the second reference signal(s); or modulation information of the second reference signal(s).

53. A first communication device, comprising:
a first transmission unit, configured to send, by using an access mode, access information and reference signal(s) associated with the access information.

54. The first communication device of claim 53, wherein the access information is information in random access.

55. The first communication device of claim 53 or 54, wherein the first communication device is a network device, the access mode is a first access mode, the access information is first access information, and the reference signal(s) is first reference signal(s).

56. The first communication device of claim 55, wherein the first access information comprises at least one of:
a Random Access Response (RAR) message in four-step random access;
a contention resolution message in the four-step random access;
a RAR message in non-contention two-step random access; or
a downlink message in two-step random access.

57. The first communication device of claim 56, wherein the first reference signal(s) comprises at least one of:
a reference signal that needs to be transmitted for the RAR message;
a reference signal on a Physical Downlink Control Channel (PDCCH) carrying the RAR message;
a reference signal on a Physical Downlink Shared Channel (PDSCH) carrying the RAR message;
a reference signal that needs to be transmitted for the contention resolution message;
a reference signal on a PDCCH carrying the contention resolution message;
a reference signal on a PDSCH carrying the contention resolution message;
a reference signal that needs to be transmitted for the downlink message in the two-step random access;
a reference signal on a PDCCH carrying the downlink message in the two-step random access; or
a reference signal on a PDSCH carrying the downlink message in the two-step random access.

58. The first communication device of any one of claims 55 to 57, wherein in the first access mode, the first access information and the first reference signal are transmitted on same time-frequency domain transmission resource(s).

59. The first communication device of claim 58, wherein transmission resource(s) of the first access information and transmission resource(s) of the first reference signal are completely or partially the same.

60. The first communication device of any one of claims 55 to 59, wherein at least one of the first access mode, a transmission scheme of the first access information, a transmission scheme of the first reference signal, a usage scope in which the first access mode is applicable to the first access information, configuration information of the first reference signal, or whether the first access mode is supported is predefined.

61. The first communication device of any one of claims 55 to 60, wherein the first transmission unit is further configured to send first information, wherein the first information is used for indicating at least one of the first access mode, a transmission scheme of the first access information, a transmission scheme of the first reference signal, a usage scope in which the first access mode is applicable to the first access information, configuration information of the first reference signal, or whether the first access mode is supported.

62. The first communication device of claim 61, wherein the first information is carried by at least one of a broadcast message, a Radio Resource Control (RRC) message, a Downlink control information (DCI) message, a downlink message in random access, a PDCCH, a PDSCH, or a downlink channel dedicated to Artificial Intelligence/Machine Learning (AI/ML).

63. The first communication device of any one of claims 55 to 62, wherein the first communication device further comprises:
a first receiving unit, configured to receive second information, wherein the second information is used for indicating or requesting configuration of at least one of the first access mode, a transmission scheme of the first access information, a transmission scheme of the first reference signal, a usage scope in which the first access mode is applicable to the first access information, configuration information of the first reference signal, or whether the first access mode is supported.

64. The first communication device of claim 63, wherein the second information is carried by at least one of device capability reporting information, an RRC message, a Uplink control information (UCI) message, an uplink message in random access, a PUCCH, a PUSCH, or an uplink channel dedicated to AI/ML.

65. The method of any one of claims 8 to 12, wherein the usage scope in which the first access mode is applicable to the first access information comprises at least one of:
the first reference signal transmitted for the RAR message is transmitted by using the first access mode;
the first reference signal on the PDCCH of the RAR message is transmitted by using the first access mode;
the first reference signal on the PDSCH of the RAR message is transmitted by using the first access mode;
the first reference signal transmitted for the contention resolution message is transmitted by using the first access mode;
the first reference signal on the PDCCH of the contention resolution message is transmitted by using the first access mode;
the first reference signal on the PDSCH of the contention resolution message is transmitted by using the first access mode;
the first reference signal transmitted for the downlink message in the two-step random access is transmitted by using the first access mode;
the first reference signal on the PDCCH of the downlink message in the two-step random access is transmitted by using the first access mode; or
the first reference signal on the PDSCH of the downlink message in the two-step random access is transmitted by using the first access mode.

66. The first communication device of any one of claims 60 to 65, wherein the configuration information of the first reference signal(s) comprises at least one of: transmission resource(s) of the first reference signal(s); transmission power(s) of the first reference signal(s); sequence information of the first reference signal(s); or modulation information of the first reference signal(s).

67. The first communication device of any one of claims 53 to 66, wherein the first communication device is a terminal device, the access mode is a second access mode, the access information is second access information, and the reference signal(s) is second reference signal(s).

68. The first communication device of claim 67, wherein the second access information comprises at least one of:
a preamble message in a four-step random access;
an uplink message in the four-step random access;
a preamble message in a non-contention two-step random access; or
an uplink message in two-step random access.

69. The first communication device of claim 68, wherein the second reference signal(s) comprises at least one of:
a reference signal that needs to be transmitted for the preamble message;
a reference signal on a PDCCH carrying the uplink message in the four-step random access;
a reference signal on a PDSCH carrying the uplink message in the four-step random access;
a reference signal that needs to be transmitted for the uplink message in the two-step random access;
a reference signal on a PDCCH carrying the uplink message in the two-step random access; or
a reference signal on a PDSCH carrying the uplink message in the two-step random access.

70. The first communication device of claim 68 or 69, wherein in the second access mode, the second access information and the second reference signal are transmitted on same time-frequency domain transmission resource(s).

71. The first communication device of claim 70, wherein transmission resource(s) of the second access information and transmission resource(s) of the second reference signal are completely or partially the same.

72. The first communication device of any one of claims 67 to 71, wherein at least one of the second access mode, a transmission scheme of the second access information, a transmission scheme of the second reference signal, a usage scope in which the second access mode is applicable to the second access information, configuration information of the second reference signal, or whether the second access mode is supported is predefined.

73. The first communication device of any one of claims 67 to 72, wherein the first receiving unit is further configured to receive third information, wherein the third information is used for indicating at least one of the second access mode, a transmission scheme of the second access information, a transmission scheme of the second reference signal(s), a usage scope in which the second access mode is applicable to the second access information, configuration information of the second reference signal(s), or whether the second access mode is supported.

74. The first communication device of claim 73, wherein the third information is carried by at least one of a broadcast message, an RRC message, a DCI message, a downlink message in random access, a PDCCH, a PDSCH, or a downlink channel dedicated to AI/ML.

75. The first communication device of any one of claims 67 to 74, wherein the first transmission unit is further configured to send fourth information, wherein the fourth information is used for indicating or requesting configuration of at least one of the second access mode, a transmission scheme of the second access information, a transmission scheme of the second reference signal(s), a usage scope in which the second access mode is applicable to the second access information, configuration information of the second reference signal(s), or whether the second access mode is supported.

76. The first communication device of claim 75, wherein the fourth information is carried by at least one of device capability reporting information, an RRC message, a UCI message, an uplink message in random access, a PUCCH, a PUSCH, or an uplink channel dedicated to AI/ML.

77. The first communication device of any one of claims 72 to 76, wherein the usage scope in which the second access mode is applicable to the second access information comprises at least one of:
the second reference signal transmitted for the preamble message is transmitted by using the second access mode;
the second reference signal on the PDCCH of the uplink message in the four-step random access is transmitted by using the second access mode;
the second reference signal on the PDSCH of the uplink message in the four-step random access is transmitted by using the second access mode;
the second reference signal transmitted for the uplink message in the two-step random access is transmitted by using the second access mode;
the second reference signal on the PDCCH of the uplink message in the two-step random access is transmitted by using the second access mode; or
the second reference signal on the PDSCH of the uplink message in the two-step random access is transmitted by using the second access mode.

78. The first communication device of any one of claims 52 to 77, wherein the configuration information of the second reference signal(s) comprises at least one of: transmission resource(s) of the second reference signal(s); transmission power(s) of the second reference signal(s); sequence information of the second reference signal(s); or modulation information of the second reference signal(s).

79. A second communication device, comprising:
a second receiving unit, configured to receive, by using an access mode, access information and reference signal(s) associated with the access information.

80. The second communication device of claim 79, wherein the access information is information in random access.

81. The second communication device of claim 79 or 80, wherein the second communication device is a terminal device, the access mode is a first access mode, the access information is first access information, and the reference signal(s) is first reference signal(s).

82. The second communication device of claim 81, wherein the first access information comprises at least one of:
a Random Access Response (RAR) message in four-step random access;
a contention resolution message in the four-step random access;
a RAR message in non-contention two-step random access; or
a downlink message in two-step random access.

83. The second communication device of claim 82, wherein the first reference signal(s) comprises at least one of:
a reference signal that needs to be transmitted for the RAR message;
a reference signal on a Physical Downlink Control Channel (PDCCH) carrying the RAR message;
a reference signal on a Physical Downlink Shared Channel (PDSCH) carrying the RAR message;
a reference signal that needs to be transmitted for the contention resolution message;
a reference signal on a PDCCH carrying the contention resolution message;
a reference signal on a PDSCH carrying the contention resolution message;
a reference signal that needs to be transmitted for the downlink message in the two-step random access;
a reference signal on a PDCCH carrying the downlink message in the two-step random access; or
a reference signal on a PDSCH carrying the downlink message in the two-step random access.

84. The second communication device of any one of claims 81 to 83, wherein in the first access mode, the first access information and the first reference signal are transmitted on same time-frequency domain transmission resource(s).

85. The second communication device of claim 84, wherein transmission resource(s) of the first access information and transmission resource(s) of the first reference signal are completely or partially the same.

86. The second communication device of any one of claims 81 to 85, wherein at least one of the first access mode, a transmission scheme of the first access information, a transmission scheme of the first reference signal, a usage scope in which the first access mode is applicable to the first access information, configuration information of the first reference signal, or whether the first access mode is supported is predefined.

87. The second communication device of any one of claims 81 to 86, wherein the second receiving unit is further configured to receive first information, wherein the first information is used for indicating at least one of the first access mode, a transmission scheme of the first access information, a transmission scheme of the first reference signal, a usage scope in which the first access mode is applicable to the first access information, configuration information of the first reference signal, or whether the first access mode is supported.

88. The second communication device of claim 87, wherein the first information is carried by at least one of a broadcast message, a Radio Resource Control (RRC) message, a Downlink control information (DCI) message, a downlink message in random access, a PDCCH, a PDSCH, or a downlink channel dedicated to Artificial Intelligence/Machine Learning (AI/ML).

89. The second communication device of any one of claims 81 to 88, wherein the second communication device further comprises:
a second transmission unit, configured to send second information, wherein the second information is used for indicating or requesting configuration of at least one of the first access mode, a transmission scheme of the first access information, a transmission scheme of the first reference signal, a usage scope in which the first access mode is applicable to the first access information, configuration information of the first reference signal, or whether the first access mode is supported.

90. The second communication device of claim 89, wherein the second information is carried by at least one of device capability reporting information, an RRC message, a Uplink control information (UCI) message, an uplink message in random access, a PUCCH, a PUSCH, or an uplink channel dedicated to AI/ML.

91. The second communication device of any one of claims 86 to 90, wherein the usage scope in which the first access mode is applicable to the first access information comprises at least one of:
the first reference signal transmitted for the RAR message is transmitted by using the first access mode;
the first reference signal on the PDCCH of the RAR message is transmitted by using the first access mode;
the first reference signal on the PDSCH of the RAR message is transmitted by using the first access mode;
the first reference signal transmitted for the contention resolution message is transmitted by using the first access mode;
the first reference signal on the PDCCH of the contention resolution message is transmitted by using the first access mode;
the first reference signal on the PDSCH of the contention resolution message is transmitted by using the first access mode;
the first reference signal transmitted for the downlink message in the two-step random access is transmitted by using the first access mode;
the first reference signal on the PDCCH of the downlink message in the two-step random access is transmitted by using the first access mode; or
the first reference signal on the PDSCH of the downlink message in the two-step random access is transmitted by using the first access mode.

92. The second communication device of any one of claims 86 to 91, wherein the configuration information of the first reference signal(s) comprises at least one of: transmission resource(s) of the first reference signal(s); transmission power(s) of the first reference signal(s); sequence information of the first reference signal(s); or modulation information of the first reference signal(s).

93. The second communication device of any one of claims 79 to 92, wherein the second communication device is a network device, the access mode is a second access mode, the access information is second access information, and the reference signal(s) is second reference signal(s).

94. The second communication device of claim 93, wherein the second access information comprises at least one of:
a preamble message in a four-step random access;
an uplink message in the four-step random access;
a preamble message in a non-contention two-step random access; or
a uplink message in two-step random access.

95. The second communication device of claim 94, wherein the second reference signal(s) comprises at least one of:
a reference signal that needs to be transmitted for the preamble message;
a reference signal on a PDCCH carrying the uplink message in the four-step random access;
a reference signal on a PDSCH carrying the uplink message in the four-step random access;
a reference signal that needs to be transmitted for the uplink message in the two-step random access;
a reference signal on a PDCCH carrying the uplink message in the two-step random access; or
a reference signal on a PDSCH carrying the uplink message in the two-step random access.

96. The second communication device of claim 94 or 95, wherein in the second access mode, the second access information and the second reference signal are transmitted on same time-frequency domain transmission resource(s).

97. The second communication device of claim 96, wherein transmission resource(s) of the second access information and transmission resource(s) of the second reference signal are completely or partially the same.

98. The second communication device of any one of claims 93 to 97, wherein at least one of the second access mode, a transmission scheme of the second access information, a transmission scheme of the second reference signal, a usage scope in which the second access mode is applicable to the second access information, configuration information of the second reference signal, or whether the second access mode is supported is predefined.

99. The second communication device of any one of claims 93 to 98, wherein the second transmission unit is further configured to send third information, wherein the third information is used for indicating at least one of the second access mode, a transmission scheme of the second access information, a transmission scheme of the second reference signal, a usage scope in which the second access mode is applicable to the second access information, configuration information of the second reference signal, or whether the second access mode is supported.

100. The second communication device of claim 99, wherein the third information is carried by at least one of a broadcast message, an RRC message, a DCI message, a downlink message in random access, a PDCCH, a PDSCH, or a downlink channel dedicated to AI/ML.

101. The second communication device of any one of claims 93 to 100, wherein the second receiving unit is further configured to receive fourth information, wherein the fourth information is used for indicating or requesting configuration of at least one of the second access mode, a transmission scheme of the second access information, a transmission scheme of the second reference signal, a usage scope in which the second access mode is applicable to the second access information, configuration information of the second reference signal, or whether the second access mode is supported.

102. The second communication device of claim 101, wherein the fourth information is carried by at least one of device capability reporting information, an RRC message, a UCI message, an uplink message in random access, a PUCCH, a PUSCH, or an uplink channel dedicated to AI/ML.

103. The second communication device of any one of claims 98 to 102, wherein the usage scope in which the second access mode is applicable to the second access information comprises at least one of:
the second reference signal transmitted for the preamble message is transmitted by using the second access mode;
the second reference signal on the PDCCH of the uplink message in the four-step random access is transmitted by using the second access mode;
the second reference signal on the PDSCH of the uplink message in the four-step random access is transmitted by using the second access mode;
the second reference signal transmitted for the uplink message in the two-step random access is transmitted by using the second access mode;
the second reference signal on the PDCCH of the uplink message in the two-step random access is transmitted by using the second access mode; or
the second reference signal on the PDSCH of the uplink message in the two-step random access is transmitted by using the second access mode.

104. The second communication device of any one of claims 98 to 103, wherein the configuration information of the second reference signal(s) comprises at least one of: transmission resource(s) of the second reference signal(s); transmission power(s) of the second reference signal(s); sequence information of the second reference signal(s); or modulation information of the second reference signal(s).

105. A communication device comprising: a transceiver, a processor and a memory, wherein the memory is configured to store a computer program, the transceiver is configured to communicate with other devices, and the processor is configured to invoke and execute the computer program stored in the memory to cause the communication device to perform the method of any one of claims 1 to 26 or any one of claims 27 to 52.

106. A chip comprising: a processor configured to invoke and execute a computer program from a memory, to cause a device on which the chip is mounted to perform the method of any one of claims 1 to 26 or any one of claims 27 to 52.

107. A computer-readable storage medium for storing a computer program that, when executed by a device, causes the device to perform the method of any one of claims 1 to 26 or any one of claims 27 to 52.

108. A computer program product comprising computer program instructions that cause a computer to perform the method of any one of claims 1 to 26 or any one of claims 27 to 52.

109. A computer program that causes a computer to perform the method of any one of claims 1 to 26 or any one of claims 27 to 52.

110. A communication system comprising:
a first communication device configured to perform the method of any one of claims 1 to 26; and
a second communication device configured to perform the method of any one of claims 27 to 52.
